# EUROPEAN PATENT APPLICATION

(11) **EP 4 346 135 A1**
(43) Date of publication of application: **03.04.2024**
(21) Application number: 22827606.9
(22) Date of filing: 22.06.2022
(51) Int. Cl.: H04L 1/00

(54) **METHOD AND APPARATUS FOR DETERMINING MODULATION AND CODING SCHEME (MCS) TABLE**

(30) Priority: 25.06.2021 CN 202110714774
(71) Applicant: Huawei Technologies Co., Ltd., Shenzhen, Guangdong 518129 (CN)
(72) Inventor: HU, Dan, Shenzhen, Guangdong 518129 (CN); ZHANG, Xu, Shenzhen, Guangdong 518129 (CN)
(74) Representative: Maiwald GmbH
(86) International application number: PCT/CN2022/100405
(87) International publication number: WO 2022/268114

(57) **Abstract**

Embodiments of this application disclose a method and an apparatus for determining a modulation and coding scheme MCS table. The method includes: When a discrete fourier transform spread orthogonal frequency division multiplexing DFT-s-OFDM waveform is used for transmission of a physical uplink shared channel PUSCH, a terminal device receives first information from a network device, where the first information indicates a quantity of transmission layers of the PUSCH; and determines, based on the first information, an MCS table used for transmission of the PUSCH. According to embodiments of this application, a demodulation threshold for uplink transmission of a PUSCH is reduced, reliability of transmission of the PUSCH is improved, and an uplink capacity is increased.

## Description

This application claims priority to Chinese Patent Application No. 202110714774.0, filed with the China National Intellectual Property Administration on June 25, 2021 and entitled "METHOD AND APPARATUS FOR DETERMINING MODULATION AND CODING SCHEME MCS TABLE", which is incorporated herein by reference in its entirety.

### TECHNICAL FIELD

This application relates to the field of communication technologies, and in particular, to a method and an apparatus for determining an MCS table.

### BACKGROUND

Before sending an uplink data channel, for example, a physical uplink shared channel (physical uplink shared channel, PUSCH), a terminal device needs to determine a modulation and coding scheme (modulation and coding scheme, MCS) used for the PUSCH. The MCS is a modulation order (modulation order) and a coding rate (coding rate) that correspond to a data channel. The terminal device determines, based on the MCS, a transport block size (transport block size, TBS) carried on the PUSCH. In 5th generation (5th generation, 5G) new radio (new radio, NR), there are two waveforms for uplink transmission: cyclic prefix orthogonal frequency division multiplexing (cyclic prefix orthogonal frequency division multiplexing, CP-OFDM) and discrete fourier transform spread orthogonal frequency division multiplexing (discrete fourier transform spread orthogonal frequency division multiplexing, DFT-s-OFDM). An existing DFT-s-OFDM waveform of NR supports only single-layer transmission, and in future evolution of 3rd Generation Partnership Project (3rd generation partnership project, 3GPP) standards, a DFT-s-OFDM waveform may support multi-layer transmission. If an MCS in an existing MCS table is used to send an uplink data channel, an uplink capacity is inevitably affected.

### SUMMARY

Embodiments of this application provide a method and an apparatus for determining an MCS table, to reduce a demodulation threshold for uplink transmission of a PUSCH, improve reliability of transmission of the PUSCH, and increase an uplink capacity.

According to a first aspect, an embodiment of this application provides a method for determining an MCS table, including: When a discrete fourier transform spread orthogonal frequency division multiplexing DFT-s-OFDM waveform is used for transmission of a physical uplink shared channel PUSCH, a terminal device receives first information from a network device, where the first information indicates a quantity of transmission layers of the PUSCH; and determines, based on the first information, an MCS table used for transmission of the PUSCH. An MCS table with same spectral efficiency but a lower coding rate is selected based on the quantity of transmission layers of the PUSCH, to reduce a demodulation threshold for uplink transmission of the PUSCH, improve reliability of transmission of the PUSCH, and increase an uplink capacity.

In a possible design, the terminal device receives second information from the network device, where the second information indicates an MCS table; and determines, based on the first information and the second information, the MCS table used for transmission of the PUSCH. An MCS table with same spectral efficiency but a lower coding rate is selected based on the quantity of transmission layers of the PUSCH indicated by the first information and the MCS table indicated by the second information, to reduce a demodulation threshold for uplink transmission of the PUSCH, improve reliability of transmission of the PUSCH, and increase an uplink capacity.

In another possible design, when the MCS table indicated by the second information is a first MCS table, and the quantity of transmission layers of the PUSCH indicated by the first information is greater than 1, the terminal device determines that a second MCS table is used for transmission of the PUSCH.

The second MCS table is as follows:

| MCS index | Modulation order | Target code rate R x 1024 | Spectral efficiency |
|---|---|---|---|
| 0 | q | 240/q | 0.2344 |
| 1 | q | 314/q | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 466 | 2.7305 |
| 18 | 6 | 517 | 3.0293 |
| 19 | 6 | 567 | 3.3223 |
| 20 | 6 | 616 | 3.6094 |
| 21 | 6 | 666 | 3.9023 |
| 22 | 6 | 719 | 4.2129 |
| 23 | 6 | 772 | 4.5234 |
| 24 | 6 | 822 | 4.8164 |
| 25 | 6 | 873 | 5.1152 |
| 26 | 6 | 910 | 5.3320 |
| 27 | 6 | 948 | 5.5547 |
| 28 | q | Reserved | |
| 29 | 2 | Reserved | |
| 30 | 4 | Reserved | |
| 31 | 6 | Reserved | |

q is equal to 1 or 2.

When the quantity of transmission layers of the PUSCH indicated by the first information is greater than 1, and the MCS table indicated by the second information is the first MCS table, an MCS table with same spectral efficiency but a lower coding rate is selected, to reduce a demodulation threshold for uplink transmission of the PUSCH, improve reliability of transmission of the PUSCH, and increase an uplink capacity.

In another possible design, when the MCS table indicated by the second information is a first MCS table, and the quantity of transmission layers of the PUSCH indicated by the first information is greater than 1, the terminal device determines that a third MCS table is used for transmission of the PUSCH.

The third MCS table is as follows:

| MCS index | Modulation order | Target code rate R x 1024 | Spectral efficiency |
|---|---|---|---|
| 0 | 2 | 30 | 0.0586 |
| 1 | 2 | 40 | 0.0781 |
| 2 | 2 | 50 | 0.0977 |
| 3 | 2 | 64 | 0.1250 |
| 4 | 2 | 78 | 0.1523 |
| 5 | 2 | 99 | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 4 | 340 | 1.3281 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 6 | 438 | 2.5664 |
| 22 | 6 | 466 | 2.7305 |
| 23 | 6 | 517 | 3.0293 |
| 24 | 6 | 567 | 3.3223 |
| 25 | 6 | 616 | 3.6094 |
| 26 | 6 | 666 | 3.9023 |
| 27 | 6 | 719 | 4.2129 |
| 28 | 6 | 772 | 4.5234 |
| 29 | 2 | Reserved | |
| 30 | 4 | Reserved | |
| 31 | 6 | Reserved | |

When the quantity of transmission layers of the PUSCH indicated by the first information is greater than 1, and the MCS table indicated by the second information is the first MCS table, an MCS table with same spectral efficiency but a lower coding rate is selected, to reduce a demodulation threshold for uplink transmission of the PUSCH, improve reliability of transmission of the PUSCH, and increase an uplink capacity.

In another possible design, when the MCS table indicated by the second information is a first MCS table, and the quantity of transmission layers of the PUSCH indicated by the first information is greater than 1, the terminal device determines that the first MCS table is used for transmission of the PUSCH; receives third information and fourth information from the network device, where the third information indicates an MCS index, the fourth information indicates an offset value M, and M is an integer greater than or equal to 0; and determines, based on the MCS index and the offset value M, an MCS in the first MCS table used for transmission of the PUSCH. An MCS index with a lower coding rate is selected based on the MCS index and the offset value M. When the DFT-s-OFDM waveform is used for transmission of the PUSCH, and the quantity of transmission layers of the PUSCH is greater than 1, a low coding rate is needed to obtain a coding gain due to a large difference in frequency choices. Therefore, selecting an MCS with a lower coding rate can reduce a demodulation threshold, improve reliability of transmission of the PUSCH, and increase an uplink capacity.

In another possible design, when the MCS table indicated by the second information is a first MCS table, and the quantity of transmission layers of the PUSCH indicated by the first information is greater than 1, the terminal device selects at least one MCS from at least one MCS table to generate a fourth MCS table as the MCS table used for transmission of the PUSCH, where the at least one MCS table includes at least one of the first MCS table, a second MCS table, and a third MCS table. An MCS from the at least one MCS table is selected to generate an MCS table with same spectral efficiency but a higher coding rate. This can reduce a demodulation threshold, improve reliability of transmission of the PUSCH, and increase an uplink capacity.

In another possible design, the fourth MCS table includes at least one of the following (modulation order, coding rate) combinations: (6, 438/1024), (6, 466/1024), and (6, 517/1024).

In another possible design, the first MCS table is as follows:

| MCS index | Modulation order | Target code rate R x 1024 | Spectral efficiency |
|---|---|---|---|
| 0 | q | 60/q | 0.0586 |
| 1 | q | 80/q | 0.0781 |
| 2 | q | 100/q | 0.0977 |
| 3 | q | 128/q | 0.1250 |
| 4 | q | 156/q | 0.1523 |
| 5 | q | 198/q | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 2 | 679 | 1.3262 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 4 | 658 | 2.5703 |
| 22 | 4 | 699 | 2.7305 |
| 23 | 4 | 772 | 3.0156 |
| 24 | 6 | 567 | 3.3223 |
| 25 | 6 | 616 | 3.6094 |
| 26 | 6 | 666 | 3.9023 |
| 27 | 6 | 772 | 4.5234 |
| 28 | q | Reserved | |
| 29 | 2 | Reserved | |
| 30 | 4 | Reserved | |
| 31 | 6 | Reserved | |

q is equal to 1 or 2.

In another possible design, the terminal device receives fifth information from the network device, where the fifth information indicates that the DFT-s-OFDM waveform is used for transmission of the PUSCH, and the fifth information is downlink control information DCI or a media access control control element MAC-CE. The downlink control information DCI or the media access control control element MAC-CE indicates that the DFT-s-OFDM waveform is used for transmission of the PUSCH, so that the terminal device selects an MCS with a lower coding rate, to reduce a demodulation threshold, improve reliability of transmission of the PUSCH, and increase an uplink capacity.

According to a second aspect, an embodiment of this application provides a method for determining an MCS table, including: A network device determines that a terminal device uses a discrete fourier transform spread orthogonal frequency division multiplexing DFT-s-OFDM waveform for transmission of a physical uplink shared channel PUSCH; and sends first information to the terminal device, where the first information indicates a quantity of transmission layers of the PUSCH, and the quantity of transmission layers of the PUSCH is used to determine an MCS table used for transmission of the PUSCH. The quantity of transmission layers of the PUSCH is indicated to the terminal device, so that the terminal device selects an MCS table with same spectral efficiency but a lower coding rate, to reduce a demodulation threshold for uplink transmission of the PUSCH, improve reliability of transmission of the PUSCH, and increase an uplink capacity.

In a possible design, the network device sends second information to the terminal device, where the second information indicates an MCS table, and the first information and the second information are used to determine the MCS table used for transmission of the PUSCH. The terminal device selects, based on the quantity of transmission layers of the PUSCH indicated by the first information and the MCS table indicated by the second information, an MCS table with same spectral efficiency but a lower coding rate, to reduce a demodulation threshold for uplink transmission of the PUSCH, improve reliability of transmission of the PUSCH, and increase an uplink capacity.

In another possible design, when the MCS table indicated by the second information is a first MCS table, and the quantity of transmission layers of the PUSCH indicated by the first information is greater than 1, a second MCS table is used for transmission of the PUSCH.

The second MCS table is as follows:

| MCS index | Modulation order | Target code rate R x 1024 | Spectral efficiency |
|---|---|---|---|
| 0 | q | 240/q | 0.2344 |
| 1 | q | 314/q | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 466 | 2.7305 |
| 18 | 6 | 517 | 3.0293 |
| 19 | 6 | 567 | 3.3223 |
| 20 | 6 | 616 | 3.6094 |
| 21 | 6 | 666 | 3.9023 |
| 22 | 6 | 719 | 4.2129 |
| 23 | 6 | 772 | 4.5234 |
| 24 | 6 | 822 | 4.8164 |
| 25 | 6 | 873 | 5.1152 |
| 26 | 6 | 910 | 5.3320 |
| 27 | 6 | 948 | 5.5547 |
| 28 | q | Reserved | |
| 29 | 2 | Reserved | |
| 30 | 4 | Reserved | |
| 31 | 6 | Reserved | |

q is equal to 1 or 2. When the quantity of transmission layers of the PUSCH indicated by the first information is greater than 1, and the MCS table indicated by the second information is the first MCS table, an MCS table with same spectral efficiency but a lower coding rate is selected, to reduce a demodulation threshold for uplink transmission of the PUSCH, improve reliability of transmission of the PUSCH, and increase an uplink capacity.

In another possible design, when the MCS table indicated by the second information is a first MCS table, and the quantity of transmission layers of the PUSCH indicated by the first information is greater than 1, a third MCS table is used for transmission of the PUSCH.

The third MCS table is as follows:

| MCS index | Modulation order | Target code rate R x 1024 | Spectral efficiency |
|---|---|---|---|
| 0 | 2 | 30 | 0.0586 |
| 1 | 2 | 40 | 0.0781 |
| 2 | 2 | 50 | 0.0977 |
| 3 | 2 | 64 | 0.1250 |
| 4 | 2 | 78 | 0.1523 |
| 5 | 2 | 99 | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 4 | 340 | 1.3281 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 6 | 438 | 2.5664 |
| 22 | 6 | 466 | 2.7305 |
| 23 | 6 | 517 | 3.0293 |
| 24 | 6 | 567 | 3.3223 |
| 25 | 6 | 616 | 3.6094 |
| 26 | 6 | 666 | 3.9023 |
| 27 | 6 | 719 | 4.2129 |
| 28 | 6 | 772 | 4.5234 |
| 29 | 2 | Reserved | |
| 30 | 4 | Reserved | |
| 31 | 6 | Reserved | |

When the quantity of transmission layers of the PUSCH indicated by the first information is greater than 1, and the MCS table indicated by the second information is the first MCS table, an MCS table with same spectral efficiency but a lower coding rate is selected, to reduce a demodulation threshold for uplink transmission of the PUSCH, improve reliability of transmission of the PUSCH, and increase an uplink capacity.

In another possible design, when the MCS table indicated by the second information is a first MCS table, and the quantity of transmission layers of the PUSCH indicated by the first information is greater than 1, the first MCS table is used for transmission of the PUSCH. The network device sends third information and fourth information to the terminal device, where the third information indicates an MCS index, the fourth information indicates an offset value M, the MCS index and the offset value M are used to determine an MCS in the first MCS table used for transmission of the PUSCH, and M is an integer greater than or equal to 0. An MCS index with a lower coding rate is selected based on the MCS index and the offset value M. When the DFT-s-OFDM waveform is used for transmission of the PUSCH, and the quantity of transmission layers of the PUSCH is greater than 1, a low coding rate is needed to obtain a coding gain due to a large difference in frequency choices. Therefore, selecting an MCS with a lower coding rate can reduce a demodulation threshold, improve reliability of transmission of the PUSCH, and increase an uplink capacity.

In another possible design, when the MCS table indicated by the second information is a first MCS table, and the quantity of transmission layers of the PUSCH indicated by the first information is greater than 1, the MCS table used for transmission of the PUSCH is a fourth MCS table generated by selecting at least one MCS from at least one MCS table, and the at least one MCS table includes at least one of the first MCS table, a second MCS table, and a third MCS table. An MCS from the at least one MCS table is selected to generate an MCS table with same spectral efficiency but a higher coding rate. This can reduce a demodulation threshold, improve reliability of transmission of the PUSCH, and increase an uplink capacity.

In another possible design, the fourth MCS table includes at least one of the following (modulation order, coding rate) combinations: (6, 438/1024), (6, 466/1024), and (6, 517/1024).

In another possible design, the first MCS table is as follows:

| MCS index | Modulation order | Target code rate R x 1024 | Spectral efficiency |
|---|---|---|---|
| 0 | q | 60/q | 0.0586 |
| 1 | q | 80/q | 0.0781 |
| 2 | q | 100/q | 0.0977 |
| 3 | q | 128/q | 0.1250 |
| 4 | q | 156/q | 0.1523 |
| 5 | q | 198/q | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 2 | 679 | 1.3262 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 4 | 658 | 2.5703 |
| 22 | 4 | 699 | 2.7305 |
| 23 | 4 | 772 | 3.0156 |
| 24 | 6 | 567 | 3.3223 |
| 25 | 6 | 616 | 3.6094 |
| 26 | 6 | 666 | 3.9023 |
| 27 | 6 | 772 | 4.5234 |
| 28 | q | Reserved | |
| 29 | 2 | Reserved | |
| 30 | 4 | Reserved | |
| 31 | 6 | Reserved | |

q is equal to 1 or 2.

In another possible design, the network device sends fifth information to the terminal device, where the fifth information indicates that the DFT-s-OFDM waveform is used for transmission of the PUSCH, and the fifth information is downlink control information DCI or a media access control control element MAC-CE. The downlink control information DCI or the media access control control element MAC-CE indicates that the DFT-s-OFDM waveform is used for transmission of the PUSCH, so that the terminal device selects an MCS with a lower coding rate, to reduce a demodulation threshold, improve reliability of transmission of the PUSCH, and increase an uplink capacity.

According to a third aspect, an embodiment of this application provides a method for determining an MCS table, including: A terminal device receives a cell identity and/or an absolute radio frequency channel number from a network device; and determines, based on the cell identity and/or the absolute radio frequency channel number, an MCS table used for transmission of a PUSCH. The MCS table used for transmission of the PUSCH is determined based on the cell identity and/or the absolute radio frequency channel number, and an MCS table with same spectral efficiency but a lower coding rate is selected, to reduce a demodulation threshold for uplink transmission of the PUSCH, improve reliability of transmission of the PUSCH, and increase an uplink capacity.

According to a fourth aspect, an embodiment of this application provides a method for determining an MCS table, including: A network device determines a cell identity and/or an absolute radio frequency channel number; and sends the cell identity and/or the absolute radio frequency channel number to a terminal device, where the cell identity or the absolute radio frequency channel number or both are used to determine an MCS table used for transmission of a PUSCH. The MCS table used for transmission of the PUSCH is determined based on the cell identity and/or the absolute radio frequency channel number, and an MCS table with same spectral efficiency but a lower coding rate is selected, to reduce a demodulation threshold for uplink transmission of the PUSCH, improve reliability of transmission of the PUSCH, and increase an uplink capacity.

According to a fifth aspect, an embodiment of this application provides an apparatus for determining an MCS table. The apparatus for determining the MCS table is configured to implement the methods and functions performed by the terminal device in the first aspect and the third aspect, and is implemented by hardware/software. The hardware/software includes modules corresponding to the foregoing functions.

According to a sixth aspect, an embodiment of this application provides an apparatus for determining an MCS table. The apparatus for determining the MCS table is configured to implement the methods and functions performed by the network device in the second aspect and the fourth aspect, and is implemented by hardware/software. The hardware/software includes modules corresponding to the foregoing functions.

According to a seventh aspect, this application provides an apparatus for determining an MCS table. The apparatus may be a terminal device, an apparatus in a terminal device, or an apparatus that can be used together with a terminal device. The apparatus for determining the MCS table may alternatively be a chip system. The apparatus for determining the MCS table may perform the methods in the first aspect and the third aspect. A function of the apparatus for determining the MCS table may be implemented by hardware, or may be implemented by hardware executing corresponding software. The hardware or the software includes one or more modules corresponding to the foregoing function. The module may be software and/or hardware. For operations performed by the apparatus for determining the MCS table and beneficial effects thereof, refer to the methods in the first aspect and the third aspect, and beneficial effects thereof. Repeated content is not described again.

According to an eighth aspect, this application provides an apparatus for determining an MCS table. The apparatus may be a network device, an apparatus in a network device, or an apparatus that can be used together with a network device. The apparatus for determining the MCS table may alternatively be a chip system. The apparatus for determining the MCS table may perform the methods in the second aspect and the fourth aspect. A function of the apparatus for determining the MCS table may be implemented by hardware, or may be implemented by hardware executing corresponding software. The hardware or the software includes one or more modules corresponding to the foregoing function. The module may be software and/or hardware. For operations performed by the apparatus for determining the MCS table and beneficial effects thereof, refer to the methods in the second aspect and the fourth aspect, and beneficial effects thereof. Repeated content is not described again.

According to a ninth aspect, this application provides an apparatus for determining an MCS table. The apparatus for determining the MCS table includes a processor. When the processor invokes a computer program in a memory, the method according to any one of the first aspect to the fourth aspect is performed.

According to a tenth aspect, this application provides an apparatus for determining an MCS table. The apparatus for determining the MCS table includes a processor and a memory. The memory is configured to store a computer program. The processor is configured to execute the computer program stored in the memory, to enable the apparatus for determining the MCS table to perform the method according to any one of the first aspect to the fourth aspect.

According to an eleventh aspect, this application provides an apparatus for determining an MCS table. The apparatus for determining the MCS table includes a processor, a memory, and a transceiver. The transceiver is configured to receive a channel or a signal, or send a channel or a signal. The memory is configured to store a computer program. The processor is configured to invoke the computer program from the memory, to perform the method according to any one of the first aspect to the fourth aspect.

According to a twelfth aspect, this application provides an apparatus for determining an MCS table. The apparatus for determining the MCS table includes a processor and an interface circuit. The interface circuit is configured to receive a computer program and transmit the computer program to the processor. The processor runs the computer program, to perform the method according to any one of the first aspect to the fourth aspect.

According to a thirteenth aspect, this application provides a computer-readable storage medium. The computer-readable storage medium is configured to store a computer program. When the computer program is executed, the method according to any one of the first aspect to the fourth aspect is implemented.

According to a fourteenth aspect, this application provides a computer program product including a computer program. When the computer program is executed, the method according to any one of the first aspect to the fourth aspect is implemented.

According to a fifteenth aspect, an embodiment of this application provides a communication system. The communication system includes at least one terminal device and at least one network device. The terminal device is configured to perform the steps in the first aspect and the third aspect, and the network device is configured to perform the steps in the second aspect and the fourth aspect.

### BRIEF DESCRIPTION OF DRAWINGS

To describe the technical solutions in embodiments of this application or in the Background more clearly, the following describes the accompanying drawings used in embodiments of this application or in the Background.
FIG. 1 is a schematic diagram of an architecture of a mobile communication system according to an embodiment of this application;
FIG. 2 is a schematic diagram of an architecture of another mobile communication system according to an embodiment of this application;
FIG. 3 is a schematic diagram of comparison of demodulation thresholds for multi-layer PUSCH transmission with a DFT-s-OFDM waveform;
FIG. 4 is a schematic diagram of comparison of demodulation thresholds for PUSCH transmission with a CP-OFDM waveform in a 2T64R configuration;
FIG. 5 is a schematic flowchart of a method for determining an MCS table according to an embodiment of this application;
FIG. 6 is a schematic flowchart of another method for determining an MCS table according to an embodiment of this application;
FIG. 7 is a schematic diagram of a structure of an apparatus for determining an MCS table according to an embodiment of this application;
FIG. 8 is a schematic diagram of a structure of another apparatus for determining an MCS table according to an embodiment of this application;
FIG. 9 is a schematic diagram of a structure of a terminal device according to an embodiment of this application; and
FIG. 10 is a schematic diagram of a structure of a network device according to an embodiment of this application.

### DESCRIPTION OF EMBODIMENTS

The following describes embodiments of this application with reference to the accompanying drawings in embodiments of this application.

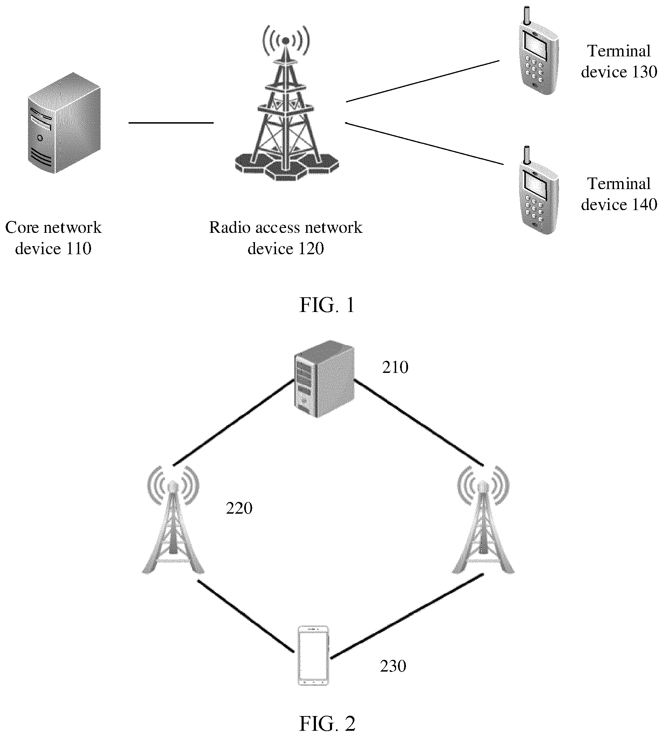

FIG. 1 is a schematic diagram of an architecture of a mobile communication system according to an embodiment of this application. The mobile communication system includes a core network device 110, one radio access network device 120, and at least one terminal device (for example, a terminal device 130 and a terminal device 140). The terminal device is connected to the radio access network device in a wireless manner, and the radio access network device is connected to the core network device in a wireless or wired manner. FIG. 2 is a schematic diagram of an architecture of another mobile communication system according to an embodiment of this application. The mobile communication system includes a core network device 210, at least two radio access network devices 220, and at least one terminal device 230. The core network device and the radio access network device may be independent and different physical devices, or functions of the core network device and logical functions of the radio access network device are integrated into a same physical device, or some functions of the core network device and some functions of the radio access network device are integrated into one physical device. The terminal device may be located at a fixed position, or may be mobile. The communication systems shown in FIG. 1 and FIG. 2 may further include another network device, for example, may further include a wireless relay device and a wireless backhaul device, which are not drawn in FIG. 1 and FIG. 2. Quantities of core network devices, radio access network devices, and terminal devices included in the mobile communication system are not limited in embodiments of this application.

The network device in embodiments of this application is a network-side entity configured to transmit or receive a signal, for example, a gNB. The network device is an access device through which the terminal device accesses the mobile communication system in a wireless manner, and may be a NodeB (NodeB), an evolved NodeB (evolved NodeB, eNB), a transmission reception point (transmission reception point, TRP), a next generation NodeB (next generation NodeB, gNB) in a 5G mobile communication system, a base station in a future mobile communication system, an access node in a Wi-Fi system, or the like. A specific technology and a specific device form that are used for the radio access network device are not limited in embodiments of this application.

The terminal device in embodiments of this application is a user-side entity configured to receive or transmit a signal, for example, a mobile phone or UE. The terminal device may be referred to as a terminal (terminal), user equipment (user equipment, UE), a mobile station (mobile station, MS), a mobile terminal (mobile terminal, MT), or the like. The terminal device may be a mobile phone (mobile phone), a tablet computer (Pad), a computer with a wireless transceiver function, a virtual reality (virtual reality, VR) terminal device, an augmented reality (Augmented Reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form that are used for the terminal device are not limited in embodiments of this application.

The radio access network device and the terminal device may be deployed on land, including indoor or outdoor devices, handheld devices, or vehicle-mounted devices; may be deployed on the water; or may be deployed on an airplane, a drone, a balloon, and a satellite in the air. Application scenarios of the radio access network device and the terminal device are not limited in embodiments of this application.

The technical solutions in embodiments of this application may be applied to various communication systems, for example, a long term evolution (long term evolution, LTE) system, a new radio (new radio, NR) system in a 5th generation (5th generation, 5G) mobile communication system, and a future mobile communication system.

Before sending a physical uplink shared channel PUSCH, the terminal device needs to determine an MCS used for the PUSCH. The MCS is a modulation order (modulation order) and a coding rate (coding rate) that correspond to a data channel. The terminal device determines, based on the MCS, a TBS carried on the PUSCH.

The PUSCH may include a PUSCH scheduled by a random access response (random access response, RAR) uplink grant (Uplink grant), a PUSCH scheduled by a fallback RAR UL grant, an Msg A PUSCH transmission, a PUSCH scheduled by a downlink control information (downlink control information, DCI) format 0_0 (cyclic redundancy check (cyclic redundancy check, CRC) of the DCI format 0_0 is scrambled by a cell radio network temporary identifier (cell-radio network temporary identifier, C-RNTI), a modulation and coding scheme cell radio network temporary identifier (MCS-C-RNTI), a temporary cell radio network temporary identifier (TC-RNTI), or a configured scheduling RNTI (configured scheduling RNTI, CS-RNTI)), a PUSCH scheduled by a DCI format 0_1 or a DCI format 0_2 (CRC of DCI is scrambled by a C-RNTI, an MCS-C-RNTI, a semi-persistent channel state information RNTI (semi-persistent channel state information RNTI, SP-CSI-RNTI), or a CS-RNTI), or a PUSCH with a configured grant (configured grant) using a CS-RNTI.

In 5G NR, there are two waveforms for uplink transmission: CP-OFDM and DFT-s-OFDM. Rules for selecting an MCS table used for a CP-OFDM waveform and an MCS table used for a DFT-s-OFDM waveform are as follows.

Case (1): Transform precoding (transform precoding) is disabled, that is, the CP-OFDM waveform is used for transmission of the PUSCH

If a parameter mcs-TableDCI-0-2 in a radio resource control (radio resource control, RRC) information element pusch-Config is set to "qam256", the PUSCH is scheduled by a PDCCH in the DCI format 0_2, and CRC of the DCI format is scrambled by a C-RNTI or an SP-CSI-RNTI, UE uses indexes in Table 5.1.3.1-2 to determine a modulation order Qm and a target code rate R for the PUSCH.

If an MCS-C-RNTI is not configured for the UE, the parameter mcs-TableDCI-0-2 in pusch-Config is set to "qam64LowSE", the PUSCH is scheduled by a PDCCH in the DCI format 0_2, and CRC of the DCI format is scrambled by a C-RNTI or an SP-CSI-RNTI, the UE uses indexes in Table 5.1.3.1-3 to determine a modulation order Qm and a target code rate R for the PUSCH.

If a parameter mcs-Table in pusch-Config is set to "qam256", the PUSCH is scheduled by a PDCCH in the DCI format 0_1, and CRC of the DCI format is scrambled by a C-RNTI or an SP-CSI-RNTI, the UE uses indexes in Table 5.1.3.1-2 to determine a modulation order Qm and a target code rate R for the PUSCH.

If an MCS-C-RNTI is not configured for the UE, the parameter mcs-Table in pusch-Config is set to "qam64LowSE", the PUSCH is scheduled by a PDCCH in a DCI format other than the DCI format 0_2 in a UE-specific search space, and CRC of the DCI format is scrambled by a C-RNTI or an SP-CSI-RNTI, the UE uses indexes in Table 5.1.3.1-3 to determine a modulation order Qm and a target code rate R for the PUSCH.

If an MCS-C-RNTI is configured for the UE, and the PUSCH is scheduled by a PDCCH with CRC scrambled by the MCS-C-RNTI, the UE uses indexes in Table 5.1.3.1-3 to determine a modulation order Qm and a target code rate R for the PUSCH.

If mcs-Table in RRC signaling configuredGrantConfig is set to "qam256", and the PUSCH is scheduled by a PDCCH with CRC scrambled by a CS-RNTI, or transmission of the PUSCH is configured-grant, the UE uses indexes in Table 5.1.3.1-2 to determine a modulation order Qm and a target code rate R for the PUSCH.

If mcs-Table in the RRC signaling configuredGrantConfig is set to "qam64LowSE", and the PUSCH is scheduled by a PDCCH with CRC scrambled by a CS-RNTI, or transmission of the PUSCH is configured-grant, the UE uses indexes in Table 5.1.3.1-3 to determine a modulation order Qm and a target code rate R for the PUSCH.

If for a MsgA PUSCH transmission, the UE uses an MCS index indicated by a higher layer parameter msgA-MCS and Table 5.1.3.1-1 to determine a target code rate for the PUSCH.

Otherwise, the UE uses MCS indexes in Table 5.1.3.1-1 to determine a modulation order and a coding rate for transmission of the PUSCH.

Case (2): Transform precoding (transform precoding) is enabled, that is, the DFT-s-OFDM waveform is used for transmission of the PUSCH

If a parameter mcs-TableTransformPrecoderDCI-0-2 in an RRC information element pusch-Config is set to "qam256", the PUSCH is scheduled by a PDCCH in the DCI format 0_2, and CRC of the DCI format is scrambled by a C-RNTI or an SP-CSI-RNTI, the UE uses indexes in Table 5.1.3.1-2 to determine a modulation order Qm and a target code rate R for the PUSCH.

If an MCS-C-RNTI is not configured for the UE, the parameter mcs-TableTransformPrecoderDCI-0-2 in pusch-Config is set to "qam64LowSE", the PUSCH is scheduled by a PDCCH in the DCI format 0_2, and CRC of the DCI format is scrambled by a C-RNTI or an SP-CSI-RNTI, the UE uses indexes in Table 6.1.4.1-2 to determine a modulation order Qm and a target code rate R for the PUSCH.

If a parameter mcs-TableTransformPrecoder in pusch-Config is set to "qam256", the PUSCH is scheduled by a PDCCH in the DCI format 0_1, and CRC of the DCI format is scrambled by a C-RNTI or an SP-CSI-RNTI, the UE uses indexes in Table 5.1.3.1-2 to determine a modulation order Qm and a target code rate R for the PUSCH.

If an MCS-C-RNTI is not configured for the UE, the parameter mcs-TableTransformPrecoder in pusch-Config is set to "qam64LowSE", the PUSCH is scheduled by a PDCCH in a DCI format other than the DCI format 0_2 in a UE-specific search space, and CRC of the DCI format is scrambled by a C-RNTI or an SP-CSI-RNTI, the UE uses indexes in Table 6.1.4.1-2 to determine a modulation order Qm and a target code rate R for the PUSCH.

If an MCS-C-RNTI is configured for the UE, and the PUSCH is scheduled by a PDCCH with CRC scrambled by the MCS-C-RNTI, the UE uses indexes in Table 6.1.4.1-2 to determine a modulation order Qm and a target code rate R for the PUSCH.

If mcs-TableTransformPrecoder in RRC signaling configuredGrantConfig is set to "qam256", and the PUSCH is scheduled by a PDCCH with CRC scrambled by a CS-RNTI, or transmission of the PUSCH is configured-grant, the UE uses indexes in Table 5.1.3.1-2 to determine a modulation order Qm and a target code rate R for the PUSCH.

If mcs-TableTransformPrecoder in the RRC signaling configuredGrantConfig is set to "qam64LowSE", and the PUSCH is scheduled by a PDCCH with CRC scrambled by a CS-RNTI, or transmission of the PUSCH is configured-grant, the UE uses indexes in Table 6.1.4.1-2 to determine a modulation order Qm and a target code rate R for the PUSCH.

If for a MsgA PUSCH transmission, the UE uses an MCS index indicated by a higher layer parameter msgA-MCS and Table 6.1.4.1-1 to determine a target code rate for the PUSCH, where q is equal to 2.

Otherwise, the UE uses MCS indexes in Table 6.1.4.1-1 to determine a modulation order and a coding rate for transmission of the PUSCH.

**Table 6.1.4.1-1**

| MCS index | Modulation order Qm | Target code rate R x 1024 | Spectral efficiency |
|---|---|---|---|
| 0 | q | 240/q | 0.2344 |
| 1 | q | 314/q | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 466 | 2.7305 |
| 18 | 6 | 517 | 3.0293 |
| 19 | 6 | 567 | 3.3223 |
| 20 | 6 | 616 | 3.6094 |
| 21 | 6 | 666 | 3.9023 |
| 22 | 6 | 719 | 4.2129 |
| 23 | 6 | 772 | 4.5234 |
| 24 | 6 | 822 | 4.8164 |
| 25 | 6 | 873 | 5.1152 |
| 26 | 6 | 910 | 5.3320 |
| 27 | 6 | 948 | 5.5547 |
| 28 | q | Reserved | |
| 29 | 2 | Reserved | |
| 30 | 4 | Reserved | |
| 31 | 6 | Reserved | |

**Table 5.1.3.1-1**

| MCS index | Modulation order Qm | Target code rate R x 1024 | Spectral efficiency |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 438 | 2.5664 |
| 18 | 6 | 466 | 2.7305 |
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | Reserved | |
| 30 | 4 | Reserved | |
| 31 | 6 | Reserved | |

Table 6.1.4.1-1 is an MCS index table (Table 6.1.4.1-1: MCS index table for PUSCH with transform precoding and 64QAM) (left) for PDSCH transmission based on transform precoding and 64 quadrature amplitude modulation, including MCS indexes, modulation orders (modulation order), target code rates (target code rate), and spectral efficiency (spectral efficiency). For example, when an MCS index is 7, a corresponding modulation order is 2, a target code rate is 526, and spectral efficiency is 1.0273.

Table 5.1.3.1-1 is an MCS index table (Table 5.1.3.1-1: MCS index table 1 for PDSCH) (right) for PSSCH transmission, including MCS indexes, modulation orders (modulation order), target code rates (target code rate), and spectral efficiency (spectral efficiency). When an MCS index is 0, a corresponding modulation order is 2, a target code rate is 120, and spectral efficiency is 0.2344.

**Table 6.1.4.1-2**

| MCS index | Modulation order Qm | Target code rate R x 1024 | Spectral efficiency |
|---|---|---|---|
| 0 | q | 60/q | 0.0586 |
| 1 | q | 80/q | 0.0781 |
| 2 | q | 100/q | 0.0977 |
| 3 | q | 128/q | 0.1250 |
| 4 | q | 156/q | 0.1523 |
| 5 | q | 198/q | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 2 | 679 | 1.3262 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| **21** | **4** | **658** | **2.5703** |
| **22** | **4** | **699** | **2.7305** |
| **23** | **4** | **772** | **3.0156** |
| 24 | 6 | 567 | 3.3223 |
| 25 | 6 | 616 | 3.6094 |
| 26 | 6 | 666 | 3.9023 |
| 27 | 6 | 772 | 4.5234 |
| 28 | q | Reserved | |
| 29 | 2 | Reserved | |
| 30 | 4 | Reserved | |
| 31 | 6 | Reserved | |

**Table 5.1.3.1-3**

| MCS index | Modulation order Qm | Target code rate R x 1024 | Spectral efficiency |
|---|---|---|---|
| 0 | 2 | 30 | 0.0586 |
| 1 | 2 | 40 | 0.0781 |
| 2 | 2 | 50 | 0.0977 |
| 3 | 2 | 64 | 0.1250 |
| 4 | 2 | 78 | 0.1523 |
| 5 | 2 | 99 | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 4 | 340 | 1.3281 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| **21** | **6** | **438** | **2.5664** |
| **22** | **6** | **466** | **2.7305** |
| **23** | **6** | **517** | **3.0293** |
| 24 | 6 | 567 | 3.3223 |
| 25 | 6 | 616 | 3.6094 |
| 26 | 6 | 666 | 3.9023 |
| 27 | 6 | 719 | 4.2129 |
| 28 | 6 | 772 | 4.5234 |
| 29 | 2 | Reserved | |
| 30 | 4 | Reserved | |
| 31 | 6 | Reserved | |

Table 6.1.4.1-2 is an MCS index table (Table 6.1.4.1-2: MCS index table 2 for PUSCH with transform precoding and 64QAM) (left) for PDSCH transmission based on transform precoding and 64 quadrature amplitude modulation, including MCS indexes, modulation orders (modulation order), target code rates (target code rate), and spectral efficiency (spectral efficiency). For example, when an MCS index is 15, a corresponding modulation order is 2, a target code rate is 679, and spectral efficiency is 1.3262.

Table 5.1.3.1-3 is an MCS index table (Table 5.1.3.1-3: MCS index table 3 for PDSCH) (right) for PSSCH transmission, including MCS indexes, modulation orders (modulation order), target code rates (target code rate), and spectral efficiency (spectral efficiency). When an MCS index is 15, a corresponding modulation order is 4, a target code rate is 340, and spectral efficiency is 1.3281.

Table 5.1.3.1-3 and Table 6.1.4.1-2 are respectively qam64LowSE MCS tables of the CP-OFDM waveform and the DFT-s-OFDM waveform used for PUSCH transmission, that is, MCS tables supporting low spectral efficiency. It may be determined through comparison, that combinations of a coding rate and a modulation scheme at boundaries of 16QAM and 64QAM modulation schemes in the two tables are different. Specifically, in the MCS table supporting the DFT-s-OFDM waveform, (modulation order, target code rate) combinations (4, 658), (4, 699), and (4, 772) corresponding to indexes 21, 22, and 23 are not included in the MCS table supporting the CP-OFDM waveform. In addition, in the MCS table supporting the CP-OFDM waveform, (modulation order, target code rate) combinations (6, 438), (6, 466), and (6, 517) corresponding to indexes 21, 22, and 23 are not included in the MCS table supporting the DFT-s-OFDM waveform. It may be understood that the DFT-s-OFDM waveform is more suitable for an MCS combination of a high coding rate and a low modulation order, and the CP-OFDM waveform is more suitable for an MCS combination of a low coding rate and a high modulation order.

**Table 5.1.3.1-2**

| MCS index | Modulation order Qm | Target code rate R x 1024 | Spectral efficiency |
|---|---|---|---|
| 0 | 2 | 120 | 0.2344 |
| 1 | 2 | 193 | 0.3770 |
| 2 | 2 | 308 | 0.6016 |
| 3 | 2 | 449 | 0.8770 |
| 4 | 2 | 602 | 1.1758 |
| 5 | 4 | 378 | 1.4766 |
| 6 | 4 | 434 | 1.6953 |
| 7 | 4 | 490 | 1.9141 |
| 8 | 4 | 553 | 2.1602 |
| 9 | 4 | 616 | 2.4063 |
| 10 | 4 | 658 | 2.5703 |
| 11 | 6 | 466 | 2.7305 |
| 12 | 6 | 517 | 3.0293 |
| 13 | 6 | 567 | 3.3223 |
| 14 | 6 | 616 | 3.6094 |
| 15 | 6 | 666 | 3.9023 |
| 16 | 6 | 719 | 4.2129 |
| 17 | 6 | 772 | 4.5234 |
| 18 | 6 | 822 | 4.8164 |
| 19 | 6 | 873 | 5.1152 |
| 20 | 8 | 682.5 | 5.3320 |
| 21 | 8 | 711 | 5.5547 |
| 22 | 8 | 754 | 5.8906 |
| 23 | 8 | 797 | 6.2266 |
| 24 | 8 | 841 | 6.5703 |
| 25 | 8 | 885 | 6.9141 |
| 26 | 8 | 916.5 | 7.1602 |
| 27 | 8 | 948 | 7.4063 |
| 28 | 2 | Reserved | |
| 29 | 4 | Reserved | |
| 30 | 6 | Reserved | |
| 31 | 8 | Reserved | |

Table 5.1.3.1-2 is an MCS index table (Table 5.1.3.1-2: MCS index table 2 for PDSCH) for PSSCH transmission, including MCS indexes, modulation orders (modulation order), target code rates (target code rate), and spectral efficiency (spectral efficiency). When an MCS index is 24, a modulation order is 8, a target code rate is 841, and spectral efficiency is 6.5703.

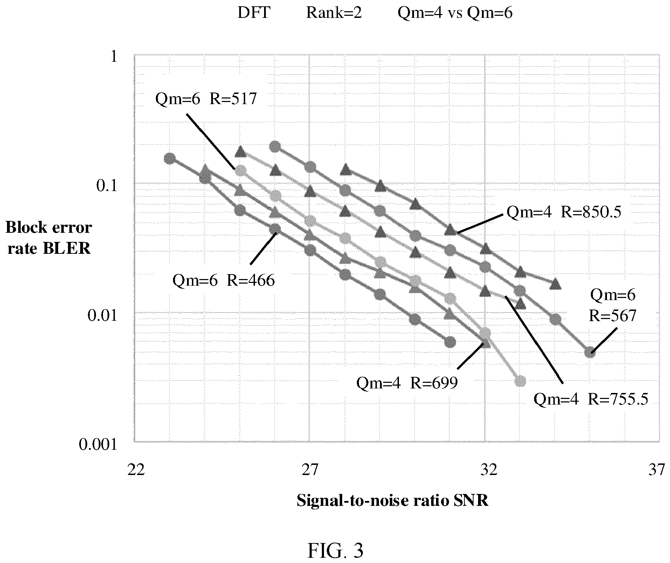

An existing DFT-s-OFDM waveform of NR supports only single-layer transmission. In order to support a higher uplink capacity, a DFT-s-OFDM waveform may support multi-layer transmission in future evolution of 3GPP standards. FIG. 3 is a schematic diagram of comparison of demodulation thresholds for multi-layer PUSCH transmission with a DFT-s-OFDM waveform. It is found through simulation that several unique MCS indexes with high modulation orders and low coding rates in a table for a CP-OFDM waveform are more suitable for transmission with a DFT-s-OFDM waveform, and a lower demodulation threshold can be obtained. A low coding rate is needed to obtain a coding gain due to a large difference in frequency choices of two-layer PUSCH transmission with a DFT waveform.

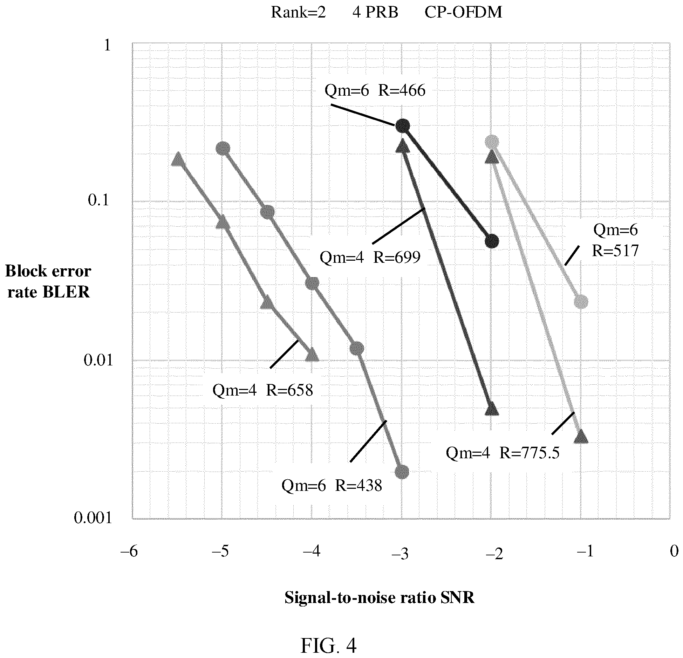

With application of larger-scale antennas, a network device supports large-scale MIMO receiving antennas: 32R, 64R, or even 128R. FIG. 4 is a schematic diagram of comparison of demodulation thresholds for PUSCH transmission with a CP-OFDM waveform in a 2T64R configuration. It is found through simulation that, in the 2T64R antenna configuration, several unique MCSs with high coding rates and low modulation orders in an MCS table for a DFT-s-OFDM waveform are more suitable for a PUSCH with a CP-OFDM waveform, and a lower demodulation threshold can be obtained. A high coding rate may be used, because a difference in frequency choices of the 64 receiving antennas is not large enough.

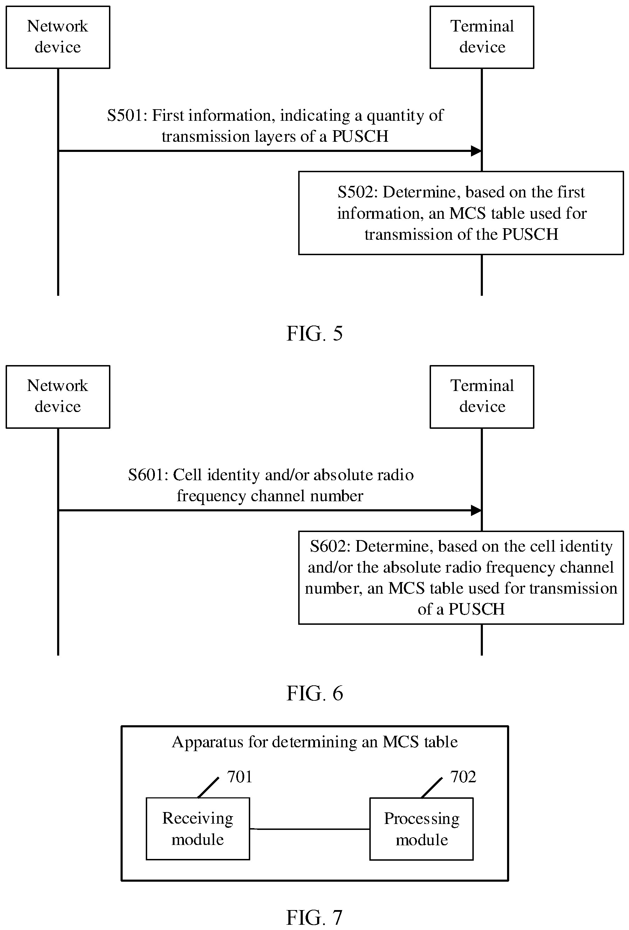

FIG. 5 is a schematic flowchart of a method for determining a modulation and coding scheme MCS table according to an embodiment of this application. The method in this embodiment of this application includes at least the following steps.

S501: When a discrete fourier transform spread orthogonal frequency division multiplexing DFT-s-OFDM waveform is used for transmission of a physical uplink shared channel PUSCH, a network device sends first information to a terminal device.

The first information may include a field Precoding information and number of layers (Precoding information and number of layers) in an uplink grant (UL grant), or a parameter precodingAndNumberOfLayers (precodingAndNumberOfLayers) in a field ConfiguredGrantConfig (ConfiguredGrantConfig) in RRC signaling. The first information indicates that a quantity of transmission layers of the PUSCH is greater than 1, and the quantity of transmission layers of the PUSCH includes but is not limited to 2, 3, 4, 8, or the like.

Optionally, the terminal device may receive second information from the network device, and the second information indicates an MCS table.

The MCS table indicated by the second information may be a first MCS table. The first MCS table is shown in Table 1, and the first MCS table includes MCS indexes, modulation orders (modulation order), target code rates (target code rate), and spectral efficiency (spectral efficiency). q is equal to 1 or 2. If the terminal device is configured to support transform precoding, q is equal to 1. If the terminal device is not configured to support transform precoding, q is equal to 2. For example, when an MCS index is 15, a corresponding modulation order is 2, a target code rate is 679, and spectral efficiency is 1.3262.

**Table 1**

| MCS index | Modulation order | Target code rate R x 1024 | Spectral efficiency |
|---|---|---|---|
| 0 | q | 60/q | 0.0586 |
| 1 | q | 80/q | 0.0781 |
| 2 | q | 100/q | 0.0977 |
| 3 | q | 128/q | 0.1250 |
| 4 | q | 156/q | 0.1523 |
| 5 | q | 198/q | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 2 | 679 | 1.3262 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 4 | 658 | 2.5703 |
| 22 | 4 | 699 | 2.7305 |
| 23 | 4 | 772 | 3.0156 |
| 24 | 6 | 567 | 3.3223 |
| 25 | 6 | 616 | 3.6094 |
| 26 | 6 | 666 | 3.9023 |
| 27 | 6 | 772 | 4.5234 |
| 28 | q | Reserved | |
| 29 | 2 | Reserved | |
| 30 | 4 | Reserved | |
| 31 | 6 | Reserved | |

The second information may include mcs-TableTransformPrecoder (mcs-TableTransformPrecoder) in a field PUSCH-Config (PUSCH-Config) in RRC signaling, which is set to qam64LowSE, mcs-TableTransformPrecoderDCI-0-2 (mcs-TableTransformPrecoderDCI-0-2) in PUSCH-Config in RRC signaling, which is set to qam64LowSE, mcs-TableTransformPrecoder in a field configuredGrantConfig (configuredGrantConfig) in RRC signaling, which is set to qam64LowSE, or an MCS-C-RNTI, where CRC of a PDCCH scheduling the PUSCH is scrambled by the MCS-C-RNTI.

Optionally, the terminal device may receive third information from the network device, and the third information indicates an MCS index. The terminal device may determine, based on the MCS index, an MCS in an MCS table used for transmission of the PUSCH. One MCS index corresponds to one (modulation order, coding rate) combination.

The third information may include a field Modulation and coding scheme (Modulation and coding scheme) in an uplink grant UL grant, or a parameter mcsAndTBS in a field ConfiguredGrantConfig (ConfiguredGrantConfig) in RRC signaling.

Optionally, the terminal device may receive fourth information from the network device, the fourth information indicates an offset value M, and M is an integer greater than or equal to 0. The MCS index and the offset value M are used to determine the MCS in the MCS table used for transmission of the PUSCH. Further, based on a sum of the MCS index and the offset value M, a corresponding MCS is searched in the MCS table.

The fourth information may be radio resource control RRC signaling or a field in DCI. Alternatively, the fourth information is represented by using an idle bit in a modulation and coding scheme field in DCI. For example, one idle bit indicates 1, indicating that an offset of x is performed based on the MCS index indicated by the third information, that is, the MCS index + x. A value of x may be predefined or may be configured by a higher layer parameter. One idle bit indicates 0, indicating that no offset is performed based on the MCS index indicated by the third information.

Optionally, the terminal device may receive fifth information from the network device, the fifth information indicates that the DFT-s-OFDM waveform is used for transmission of the PUSCH, and the fifth information is downlink control information DCI or a media access control control element (media access control-control element, MAC-CE). The terminal device may determine, based on the fifth information, that transform precoding (transform precoding, which is also referred to as discrete fourier transform (discrete Fourier transform, DFT)) is used for the PUSCH, that is, the DFT-s-OFDM waveform is used for transmission of the PUSCH.

The fifth information may include msg3-transformPrecoder (msg3-transformPrecoder), which is enabled, msgA-TransformPrecoder (msgA-TransformPrecoder), which is enabled (enabled), or transformPrecoder in an RRC parameter pusch-Config or configuredGrantConfig, which is enabled (enabled).

It should be noted that the first information, the second information, the third information, the fourth information, and the fifth information may all be carried in one or more pieces of RRC signaling. Alternatively, the second information and the fifth information are carried in one or more pieces of RRC signaling, and the first information, the third information, and the fourth information are carried in one or more pieces of DCI.

S502: Determine, based on the first information, the MCS table used for transmission of the PUSCH.

Optionally, the terminal device may determine, based on the quantity of transmission layers of the PUSCH indicated by the first information and the MCS table indicated by the second information, the MCS table used for transmission of the PUSCH. The quantity of transmission layers of the PUSCH indicated by the first information is greater than 1, and the MCS table indicated by the second information is the first MCS table.

Optionally, the MCS in the MCS table used for transmission of the PUSCH may be determined based on the MCS index indicated by the third information. Further, the MCS in the MCS table used for transmission of the PUSCH may be determined based on the MCS index indicated by the third information and the offset value M indicated by the fourth information.

That the MCS in the MCS table used for transmission of the PUSCH is determined includes at least the following several optional manners.

In a first optional manner, when the MCS table indicated by the second information is the first MCS table, and the quantity of transmission layers of the PUSCH indicated by the first information is greater than 1, the terminal device determines that a second MCS table is used for transmission of the PUSCH.

The second MCS table is shown in Table 2, and the second MCS table includes MCS indexes, modulation orders (modulation order), target code rates (target code rate), and spectral efficiency (spectral efficiency). q is equal to 1 or 2. If the terminal device is configured to support transform precoding, q is equal to 1. If the terminal device is not configured to support transform precoding, q is equal to 2.

The terminal device may find, in the second MCS table based on the MCS index indicated by the third information, an MCS corresponding to the MCS index. For example, when the MCS index indicated by the third information is 15, it may be learned from Table 2 that a corresponding modulation order used for transmission of the PUSCH is 4, a target code rate is 616, and spectral efficiency is 2.4063. Alternatively, a corresponding MCS may be found in the second MCS table based on the MCS index indicated by the third information and the offset value M indicated by the fourth information. For example, when an MCS index 1 indicated by the third information is 15, and M is equal to 3, an MCS index 2 is 18. It may be learned from Table 2 that, when the MCS index 2 is 18, a corresponding modulation order used for transmission of the PUSCH is 6, a target code rate is 517, and spectral efficiency is 3.0269.

**Table 2**

| MCS index | Modulation order | Target code rate R x 1024 | Spectral efficiency |
|---|---|---|---|
| 0 | q | 240/q | 0.2344 |
| 1 | q | 314/q | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 466 | 2.7305 |
| 18 | 6 | 517 | 3.0293 |
| 19 | 6 | 567 | 3.3223 |
| 20 | 6 | 616 | 3.6094 |
| 21 | 6 | 666 | 3.9023 |
| 22 | 6 | 719 | 4.2129 |
| 23 | 6 | 772 | 4.5234 |
| 24 | 6 | 822 | 4.8164 |
| 25 | 6 | 873 | 5.1152 |
| 26 | 6 | 910 | 5.3320 |
| 27 | 6 | 948 | 5.5547 |
| 28 | q | Reserved | |
| 29 | 2 | Reserved | |
| 30 | 4 | Reserved | |
| 31 | 6 | Reserved | |

It should be noted that the second MCS table is a default 64QAM MCS table used when transform precoding is used for transmission of the PUSCH (that is, uplink transmission with a DFT-s-OFDM waveform) of the terminal device, the terminal device does not support 256QAM modulation, and the terminal device does not need to use an MCS table with low spectral efficiency. When the DFT-s-OFDM waveform is used for transmission of the PUSCH, and the quantity of transmission layers of the PUSCH is greater than 1, a low coding rate is needed to obtain a coding gain due to a large difference in frequency choices. Under same spectral efficiency, a PUSCH transmission demodulation threshold of an MCS combination with a low modulation order and a high coding rate (corresponding to the MCS index 22/23 in Table 1) is at least 0.5 dB lower than that of an MCS combination with a high modulation order and a low coding rate (corresponding to the MCS index 17/18 in Table 2). Therefore, selecting an MCS table with same spectral efficiency but a lower coding rate can reduce a demodulation threshold, improve reliability of transmission of the PUSCH, and increase an uplink capacity.

In a second optional manner, when the MCS table indicated by the second information is the first MCS table, and the quantity of transmission layers of the PUSCH indicated by the first information is greater than 1, the terminal device determines that a third MCS table is used for transmission of the PUSCH.

The third MCS table is shown in Table 3, and the third MCS table includes MCS indexes, modulation orders (modulation order), target code rates (target code rate), and spectral efficiency (spectral efficiency).

The terminal device may find, in the third MCS table based on the MCS index indicated by the third information, an MCS corresponding to the MCS index. For example, when the MCS index indicated by the third information is 15, it is learned from Table 3 that a corresponding modulation order used for transmission of the PUSCH is 4, a target code rate is 340, and spectral efficiency is 1.3281. Alternatively, a corresponding MCS may be found in the second MCS table based on the MCS index indicated by the third information and the offset value M indicated by the fourth information. For example, when an MCS index 1 indicated by the third information is 15, and M is equal to 3, an MCS index 2 is 18. It is learned from Table 3 that, when the MCS index 2 is 18, a corresponding modulation order used for transmission of the PUSCH is 4, a target code rate is 490, and spectral efficiency is 1.9141.

**Table 3**

| MCS index | Modulation order | Target code rate R x 1024 | Spectral efficiency |
|---|---|---|---|
| 0 | 2 | 30 | 0.0586 |
| 1 | 2 | 40 | 0.0781 |
| 2 | 2 | 50 | 0.0977 |
| 3 | 2 | 64 | 0.1250 |
| 4 | 2 | 78 | 0.1523 |
| 5 | 2 | 99 | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 4 | 340 | 1.3281 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 6 | 438 | 2.5664 |
| 22 | 6 | 466 | 2.7305 |
| 23 | 6 | 517 | 3.0293 |
| 24 | 6 | 567 | 3.3223 |
| 25 | 6 | 616 | 3.6094 |
| 26 | 6 | 666 | 3.9023 |
| 27 | 6 | 719 | 4.2129 |
| 28 | 6 | 772 | 4.5234 |
| 29 | 2 | Reserved | |
| 30 | 4 | Reserved | |
| 31 | 6 | Reserved | |

It should be noted that the third MCS table is an MCS table used when transform precoding is not used for transmission of the PUSCH of the terminal device, that is, a CP-OFDM waveform is used, and transmission of the PUSCH supports low spectral efficiency. When the DFT-s-OFDM waveform is used for transmission of the PUSCH, and the quantity of transmission layers of the PUSCH is greater than 1, a low coding rate is needed to obtain a coding gain due to a large difference in frequency choices. Under same spectral efficiency, a PUSCH transmission demodulation threshold of an MCS combination with a low modulation order and a high coding rate (corresponding to the MCS index 21/22/23 in Table 1) is at least 0.5 dB lower than that of an MCS combination with a high modulation order and a low coding rate (corresponding to the MCS index 21/22/23 in Table 3). Therefore, selecting an MCS table with same spectral efficiency but a lower coding rate can reduce a demodulation threshold, improve reliability of transmission of the PUSCH, and increase an uplink capacity.

In a third optional manner, when the MCS table indicated by the second information is the first MCS table, and the quantity of transmission layers of the PUSCH indicated by the second information is greater than 1, the terminal device determines that the first MCS table is used for transmission of the PUSCH. Then, an MCS in the first MCS table used for transmission of the PUSCH is determined based on the MCS index and the offset value M.

For example, the third information indicates an MCS index 1, the fourth information indicates an offset value M, an MCS index 2 is obtained by adding the offset value M to the MCS index 1, and an MCS corresponding to the MCS index 2 is found in the first MCS table. For example, when the MCS index 1 indicated by the third information is 15, and M indicated by the fourth information is equal to 3, the MCS index 2 is 18. It is learned from Table 1 that a corresponding modulation order used for transmission of the PUSCH is 4, a target code rate is 490, and spectral efficiency is 1.9141.

It should be noted that an MCS index with a lower coding rate is selected based on the MCS index and the offset value M. When the DFT-s-OFDM waveform is used for transmission of the PUSCH, and the quantity of transmission layers of the PUSCH is greater than 1, a low coding rate is needed to obtain a coding gain due to a large difference in frequency choices. Therefore, selecting an MCS table with a lower coding rate can reduce a demodulation threshold, improve reliability of transmission of the PUSCH, and increase an uplink capacity.

Alternatively, an MCS in the first MCS table used for transmission of the PUSCH may be determined based on the MCS index. For example, when the MCS index indicated by the third information is 15, it is learned from Table 3 that, the MCS index is 15, a corresponding modulation order used for transmission of the PUSCH is 2, a target code rate is 679, and spectral efficiency is 1.3262.

In a fourth optional manner, when the MCS table indicated by the second information is the first MCS table, and the quantity of transmission layers of the PUSCH indicated by the second information is greater than 1, the terminal device selects at least one MCS from at least one MCS table to generate a fourth MCS table as the MCS table used for transmission of the PUSCH.

The at least one MCS table may include at least one of the first MCS table, the second MCS table, and the third MCS table. Some MCS entries may be separately selected from the first MCS table, the second MCS table, and the third MCS table, to generate the fourth MCS table. The fourth MCS table is a newly defined MCS table. The fourth MCS table includes an MCS index, a modulation order (modulation order), a target code rate (target code rate), and spectral efficiency (spectral efficiency).

The fourth MCS table includes at least one of the following (modulation order, coding rate) combinations: (6, 438/1024), (6, 466/1024), and (6, 517/1024).

Optionally, based on the MCS index indicated by the third information, an MCS corresponding to the MCS index may be found in the fourth MCS table. Alternatively, a corresponding MCS may be found in the second MCS table based on the MCS index indicated by the third information and the offset value M indicated by the fourth information.

It should be noted that an MCS from the at least one MCS table is selected to generate an MCS table with same spectral efficiency but a higher coding rate. When the DFT-s-OFDM waveform is used for transmission of the PUSCH, and the quantity of transmission layers of the PUSCH is greater than 1, a low coding rate is needed to obtain a coding gain due to a large difference in frequency choices. Under same spectral efficiency, a PUSCH transmission demodulation threshold of an MCS combination with a low modulation order and a high coding rate (corresponding to the MCS index 21/22/23 in Table 1) is at least 0.5 dB lower than that of an MCS combination with a high modulation order and a low coding rate (corresponding to the MCS index 21/22/23 in Table 3). Therefore, selecting an MCS table with same spectral efficiency but a higher coding rate can reduce a demodulation threshold, improve reliability of transmission of the PUSCH, and increase an uplink capacity.

In this embodiment of this application, when the DFT-s-OFDM waveform is used for transmission of the PUSCH, and the quantity of transmission layers of the PUSCH is greater than 1, an MCS table with same spectral efficiency but a lower coding rate is selected, to reduce a demodulation threshold for uplink transmission of the PUSCH, improve reliability of transmission of the PUSCH, and increase an uplink capacity.

FIG. 6 is a schematic flowchart of a method for determining an MCS table according to an embodiment of this application. The method in this embodiment of this application includes at least the following steps.

S601: A network device sends a cell identity (Cell ID) and/or an absolute radio frequency channel number (5G absolute radio frequency channel number, ARFCN) to a terminal device.

Optionally, the network device may send configuration information to the terminal device by using RRC signaling. The configuration information may include a correspondence between the cell identity and/or the absolute radio frequency channel number and an MCS table. The MCS table may include at least one of the foregoing first MCS table, the second MCS table, and the third MCS table.

For example, a cell identity 1 corresponds to the first MCS table, a cell identity 2 corresponds to the second MCS table, and a cell identity 3 corresponds to the third MCS table. For another example, a cell identity 1 and an absolute radio frequency channel number 1 correspond to the third MCS table, and the cell identity 1 and an absolute radio frequency channel number 2 correspond to the second MCS table.

S602: The terminal device determines, based on the cell identity and/or the absolute radio frequency channel number, an MCS table used for transmission of a PUSCH.

Specifically, after receiving the cell identity and/or the absolute radio frequency channel number, the terminal device may determine, based on the cell identity and/or the absolute radio frequency channel number and the correspondence between the cell identity and/or the absolute radio frequency channel number and the MCS table, the MCS table used for transmission of the PUSCH.

Optionally, the terminal device may select an entry in the MCS table, to determine an MCS used for transmission of the PUSCH. Further, the terminal device may receive indication information sent by the network device. The indication information indicates an MCS index. The terminal device may search, in the MCS table based on the MCS index, for an MCS corresponding to the MCS index.

In this embodiment of this application, based on the cell identity and/or the absolute radio frequency channel number, the MCS table used for transmission of the PUSCH is determined, and an MCS table with same spectral efficiency but a lower coding rate is selected, to reduce a demodulation threshold for uplink transmission of the PUSCH, improve reliability of transmission of the PUSCH, and increase an uplink capacity.

It may be understood that, in the foregoing method embodiments, the methods and operations implemented by the terminal device may alternatively be implemented by a component (for example, a chip or a circuit) used in the terminal device, and the methods and operations implemented by the network device may alternatively be implemented by a component (for example, a chip or a circuit) used in the network device.

The foregoing mainly describes the solutions provided in embodiments of this application from the perspective of interaction between the devices. It may be understood that, to implement the foregoing functions, each network element such as a transmitting end device or a receiving end device includes a corresponding hardware structure and/or software module for performing each function. A person skilled in the art may be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it shall not be considered that the implementation goes beyond the scope of this application.

In embodiments of this application, division of functional modules may be performed on the transmitting end device or the receiving end device based on the foregoing method example. For example, each functional module may be obtained through division corresponding to each function, or two or more functions may be integrated into one processing module. The integrated module may be implemented in a form of hardware, or may be implemented in a form of a software functional module. It should be noted that, in embodiments of this application, division of the modules is an example, is merely logical function division, and may be other division in actual implementation. Descriptions are provided below by using an example in which each functional module is obtained through division corresponding to each function.

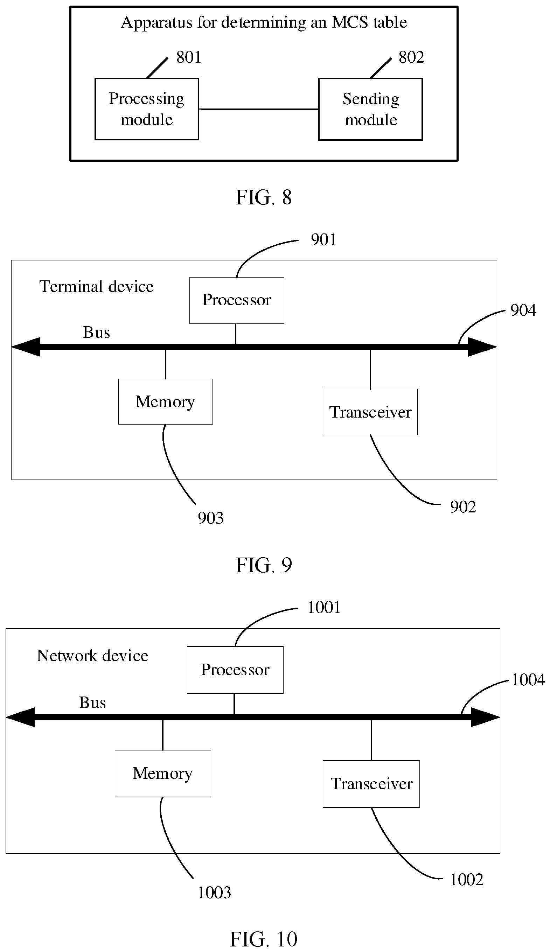

The foregoing describes in detail the methods according to embodiments of this application with reference to FIG. 5 and FIG. 6. The following describes in detail apparatuses for determining a modulation and coding scheme MCS table according to embodiments of this application with reference to FIG. 7 and FIG. 8. It should be understood that descriptions of apparatus embodiments correspond to the descriptions of the method embodiments. Therefore, for content that is not described in detail, refer to the foregoing method embodiments. For brevity, details are not described herein again.

FIG. 7 is a schematic diagram of a structure of an apparatus for determining an MCS table according to an embodiment of this application. The apparatus for determining the MCS table may include a receiving module 701 and a processing module 702. The receiving module 701 may communicate with the outside. The receiving module 701 may also be referred to as a communication interface, a transceiver unit, or a transceiver module. The receiving module 701 may be configured to perform actions performed by the terminal device in the foregoing method embodiments. The processing module 702 is configured to perform processing, for example, determine an MCS table used for transmission of a PUSCH.

For example, the receiving module 701 may also be referred to as a transceiver module or a transceiver unit (including a receiving unit and a receiving unit), which are respectively configured to perform sending steps and receiving steps of the terminal device in the foregoing method embodiments.

In a possible design, the apparatus for determining the MCS table may implement corresponding steps or processes performed by the terminal device in the foregoing method embodiments. For example, the apparatus for determining the MCS table may be a terminal device, or may be a chip or a circuit configured in a terminal device. The receiving module 701 is configured to perform receiving and sending related operations on a terminal device side in the foregoing method embodiments. The processing module 702 is configured to perform processing related operations of the terminal device in the foregoing method embodiments.

The receiving module 701 is configured to: when a discrete fourier transform spread orthogonal frequency division multiplexing DFT-s-OFDM waveform is used for transmission of a physical uplink shared channel PUSCH, receive first information from a network device. The first information indicates a quantity of transmission layers of the PUSCH.

The processing module 702 is configured to determine, based on the first information, an MCS table used for transmission of the PUSCH.

Optionally, the receiving module 701 is further configured to receive second information from the network device, and the second information indicates an MCS table. The processing module 702 is further configured to determine, based on the first information and the second information, the MCS table used for transmission of the PUSCH.

Optionally, the processing module 702 is further configured to: when the MCS table indicated by the second information is a first MCS table, and the quantity of transmission layers of the PUSCH indicated by the first information is greater than 1, determine that a second MCS table is used for transmission of the PUSCH.

The second MCS table is shown in the foregoing Table 2.

Optionally, the processing module 702 is further configured to: when the MCS table indicated by the second information is a first MCS table, and the quantity of transmission layers of the PUSCH indicated by the first information is greater than 1, determine that a third MCS table is used for transmission of the PUSCH.

The third MCS table is shown in the foregoing Table 3.

Optionally, the processing module 702 is further configured to: when the MCS table indicated by the second information is a first MCS table, and the quantity of transmission layers of the PUSCH indicated by the first information is greater than 1, determine that the first MCS table is used for transmission of the PUSCH. The receiving module 701 is further configured to receive third information and fourth information from the network device, the third information indicates an MCS index, the fourth information indicates an offset value M, and M is an integer greater than or equal to 0.

The processing module 702 is further configured to determine, based on the MCS index and the offset value M, an MCS in the first MCS table used for transmission of the PUSCH.

Optionally, the processing module 702 is further configured to: when the MCS table indicated by the second information is a first MCS table, and the quantity of transmission layers of the PUSCH indicated by the first information is greater than 1, select at least one MCS from at least one MCS table to generate a fourth MCS table as the MCS table used for transmission of the PUSCH. The at least one MCS table includes at least one of the first MCS table, a second MCS table, and a third MCS table.

The fourth MCS table includes at least one of the following (modulation order, coding rate) combinations: (6, 438/1024), (6, 466/1024), and (6, 517/1024).

The first MCS table is shown in the foregoing Table 1.

Optionally, the receiving module 701 is further configured to receive fifth information from the network device, the fifth information indicates that the DFT-s-OFDM waveform is used for transmission of the PUSCH, and the fifth information is downlink control information DCI or a media access control control element MAC-CE.

It should be noted that, for implementation of each module, refer to corresponding descriptions in the method embodiments shown in FIG. 5 and FIG. 6, to perform the methods and functions performed by the terminal device in the foregoing embodiments.

FIG. 8 is a schematic diagram of a structure of an apparatus for determining an MCS table according to an embodiment of this application. The apparatus for determining the MCS table may include a processing module 801 and a sending module 802. The sending module 802 may communicate with the outside. The sending module 802 may also be referred to as a communication interface, a transceiver unit, or a transceiver module. The sending module 802 may be configured to perform actions performed by the network device in the foregoing method embodiments. The processing module 801 is configured to perform processing, for example, determine that a terminal device uses a DFT-s-OFDM waveform for transmission of a PUSCH.

For example, the sending module 802 may also be referred to as a transceiver module or a transceiver unit (including a receiving unit and a receiving unit), which are respectively configured to perform sending steps and receiving steps of the network device in the foregoing method embodiments.

In a possible design, the apparatus for determining the MCS table may implement corresponding steps or processes performed by the network device in the foregoing method embodiments. For example, the apparatus for determining the MCS table may be a network device, or may be a chip or a circuit configured in a network device. The sending module 802 is configured to perform receiving and sending related operations on a network device side in the foregoing method embodiments. The processing module 801 is configured to perform processing related operations of the network device in the foregoing method embodiments.

The processing module 801 is configured to determine that a terminal device uses a discrete fourier transform spread orthogonal frequency division multiplexing DFT-s-OFDM waveform for transmission of a physical uplink shared channel PUSCH.

The sending module 802 is configured to send first information to the terminal device, the first information indicates a quantity of transmission layers of the PUSCH, and the quantity of transmission layers of the PUSCH is used to determine an MCS table used for transmission of the PUSCH.

Optionally, the sending module 802 is further configured to send second information to the terminal device, the second information indicates an MCS table, and the first information and the second information are used to determine the MCS table used for transmission of the PUSCH.

Optionally, when the MCS table indicated by the second information is a first MCS table, and the quantity of transmission layers of the PUSCH indicated by the first information is greater than 1, a second MCS table is used for transmission of the PUSCH

The second MCS table is shown in the foregoing Table 2.

Optionally, when the MCS table indicated by the second information is a first MCS table, and the quantity of transmission layers of the PUSCH indicated by the first information is greater than 1, a third MCS table is used for transmission of the PUSCH.

The third MCS table is shown in the foregoing Table 3.

Optionally, when the MCS table indicated by the second information is a first MCS table, and the quantity of transmission layers of the PUSCH indicated by the first information is greater than 1, the first MCS table is used for transmission of the PUSCH.

The sending module 802 is further configured to send third information and fourth information to the terminal device, the third information indicates an MCS index, the fourth information indicates an offset value M, the MCS index and the offset value M are used to determine an MCS in the first MCS table used for transmission of the PUSCH, and M is an integer greater than or equal to 0.

Optionally, when the MCS table indicated by the second information is a first MCS table, and the quantity of transmission layers of the PUSCH indicated by the first information is greater than 1, the MCS table used for transmission of the PUSCH is a fourth MCS table generated by selecting at least one MCS from at least one MCS table.

Optionally, the fourth MCS table includes at least one of the following (modulation order, coding rate) combinations: (6, 438/1024), (6, 466/1024), and (6, 517/1024).

Optionally, the first MCS table is shown in the foregoing Table 1.

Optionally, the sending module 802 is further configured to send fifth information to the terminal device, the fifth information indicates that the DFT-s-OFDM waveform is used for transmission of the PUSCH, and the fifth information is downlink control information DCI or a media access control control element MAC-CE.

It should be noted that, for implementation of each module, refer to corresponding descriptions in the method embodiments shown in FIG. 5 and FIG. 6, to perform the methods and functions performed by the network device in the foregoing embodiments.

FIG. 9 is a schematic diagram of a structure of a terminal device according to an embodiment of this application. The terminal device may be used in the systems shown in FIG. 1 and FIG. 2, to perform the functions of the terminal device in the foregoing method embodiments, or implement the steps or procedures performed by the terminal device in the foregoing method embodiments.

As shown in FIG. 9, the terminal device includes a processor 901 and a transceiver 902. Optionally, the terminal device further includes a memory 903. The processor 901, the transceiver 902, and the memory 903 may communicate with each other by using an internal connection path, to transfer a control and/or data signal. The memory 903 is configured to store a computer program. The processor 901 is configured to invoke the computer program from the memory 903 and run the computer program, to control the transceiver 902 to send or receive a signal. Optionally, the terminal device may further include an antenna, configured to send, by using a radio signal, uplink data or uplink control signaling output by the transceiver 902.

The processor 901 may correspond to the processing module in FIG. 7, and may be combined with the memory 903 into a processing apparatus. The processor 901 is configured to execute program code stored in the memory 903 to implement the foregoing functions. In specific implementation, the memory 903 may alternatively be integrated into the processor 901, or may be independent of the processor 901.

The transceiver 902 may correspond to the receiving module in FIG. 7, and may also be referred to as a transceiver unit or a transceiver module. The transceiver 902 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that the terminal device shown in FIG. 9 can implement the processes related to the terminal device in the method embodiments shown in FIG. 5 and FIG. 6. Operations and/or functions of modules in the terminal device are intended to implement corresponding procedures in the foregoing method embodiments. For details, refer to descriptions in the foregoing method embodiments. To avoid repetition, detailed descriptions are appropriately omitted herein.

The processor 901 may be configured to perform an action that is implemented inside the terminal device and that is described in the foregoing method embodiments. The transceiver 902 may be configured to perform an action of sending or receiving that is performed by the terminal device to or from the network device and that is described in the foregoing method embodiments. For details, refer to descriptions in the foregoing method embodiments. Details are not described herein again.

The processor 901 may be a central processing unit, a general purpose processor, a digital signal processor, an application-specific integrated circuit, a field programmable gate array or another programmable logic device, a transistor logic device, a hardware component, or any combination thereof. The processor 901 may implement or execute various example logical blocks, modules, and circuits described with reference to content disclosed in this application. The processor 901 may alternatively be a combination for implementing a computing function, for example, a combination of one or more microprocessors, a combination of a digital signal processor and a microprocessor, or the like. A communication bus 904 may be a peripheral component interconnect PCI bus, an extended industry standard architecture EISA bus, or the like. The bus may be classified into an address bus, a data bus, a control bus, and the like. For ease of representation, only one thick line is used to represent the bus in FIG. 9, but this does not mean that there is only one bus or only one type of bus. The communication bus 904 is configured to implement connection and communication between these components. The transceiver 902 in this embodiment of this application is configured to perform signaling or data communication with another node device. The memory 903 may include a volatile memory, for example, a nonvolatile dynamic random access memory (nonvolatile random access memory, NVRAM), a phase change RAM (phase change RAM, PRAM), a magnetoresistive RAM (magnetoresistive RAM, MRAM), or the like, or may include a nonvolatile memory, for example, at least one magnetic disk storage device, an electrically erasable programmable read-only memory (electrically erasable programmable read-only memory, EEPROM), a flash memory device such as a NOR flash memory (NOR flash memory) or a NAND flash memory (NAND flash memory), a semiconductor device such as a solid-state disk (solid state disk, SSD), or the like. Optionally, the memory 903 may alternatively be at least one storage apparatus far away from the processor 901. Optionally, the memory 903 may further store a group of computer program code or configuration information. Optionally, the processor 901 may further execute a program stored in the memory 903. The processor may cooperate with the memory and the transceiver, to perform any method and function of the terminal device in the foregoing embodiments of this application.

FIG. 10 is a schematic diagram of a structure of a network device according to an embodiment of this application. The network device may be used in the systems shown in FIG. 1 and FIG. 2, to perform the functions of the network device in the foregoing method embodiments, or implement the steps or procedures performed by the network device in the foregoing method embodiments.

As shown in FIG. 10, the network device includes a processor 1001 and a transceiver 1002. Optionally, the network device further includes a memory 1003. The processor 1001, the transceiver 1002, and the memory 1003 may communicate with each other by using an internal connection path, to transfer a control and/or data signal. The memory 1003 is configured to store a computer program. The processor 1001 is configured to invoke the computer program from the memory 1003 and run the computer program, to control the transceiver 1002 to send or receive a signal. Optionally, the network device may further include an antenna, configured to send, by using a radio signal, uplink data or uplink control signaling output by the transceiver 1002.

The processor 1001 may correspond to the processing module in FIG. 8, and may be combined with the memory 1003 into a processing apparatus. The processor 1001 is configured to execute program code stored in the memory 1003 to implement the foregoing functions. In specific implementation, the memory 1003 may alternatively be integrated into the processor 1001, or may be independent of the processor 1001.

The transceiver 1002 may correspond to the sending module in FIG. 8, and may also be referred to as a transceiver unit or a transceiver module. The transceiver 1002 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that the network device shown in FIG. 10 can implement the processes related to the network device in the method embodiments shown in FIG. 5 and FIG. 6. Operations and/or functions of modules in the network device are intended to implement corresponding procedures in the foregoing method embodiments. For details, refer to descriptions in the foregoing method embodiments. To avoid repetition, detailed descriptions are appropriately omitted herein.

The processor 1001 may be configured to perform an action that is implemented inside the network device and that is described in the foregoing method embodiments. The transceiver 1002 may be configured to perform an action of sending or receiving that is performed by the network device to or from the terminal device and that is described in the foregoing method embodiments. For details, refer to descriptions in the foregoing method embodiments. Details are not described herein again.

The processor 1001 may be various types of processor mentioned above. A communication bus 1004 may be a peripheral component interconnect PCI bus, an extended industry standard architecture EISA bus, or the like. The bus may be classified into an address bus, a data bus, a control bus, and the like. For ease of representation, only one thick line is used to represent the bus in FIG. 10, but this does not mean that there is only one bus or only one type of bus. The communication bus 1004 is configured to implement connection and communication between these components. The transceiver 1002 of the device in this embodiment of this application is configured to perform signaling or data communication with another device. The memory 1003 may be various types of memory mentioned above. Optionally, the memory 1003 may alternatively be at least one storage apparatus far away from the processor 1001. The memory 1003 stores a group of computer program code or configuration information, and the processor 1001 executes a program in the memory 1003. The processor may cooperate with the memory and the transceiver, to perform any method and function of the network device in the foregoing embodiments of this application.

An embodiment of this application further provides a chip system. The chip system includes a processor, configured to support a terminal device or a network device in implementing a function in any one of the foregoing embodiments, for example, generating or processing the DCI in the foregoing method. In a possible design, the chip system may further include a memory, and the memory is configured to store program instructions and data that are necessary for the terminal device or the network device. The chip system may include a chip, or may include a chip and another discrete device. Input and output of the chip system respectively correspond to receiving operations and sending operations of the terminal device or the network device in the method embodiments.

An embodiment of this application further provides a processing apparatus, including a processor and an interface. The processor may be configured to perform the method in the foregoing method embodiments.

It should be understood that the processing apparatus may be a chip. For example, the processing apparatus may be a field programmable gate array (field programmable gate array, FPGA), an application-specific integrated circuit (application specific integrated circuit, ASIC), a system on chip (system on chip, SoC), a central processing unit (central processor unit, CPU), a network processor (network processor, NP), a digital signal processor (digital signal processor, DSP), a micro controller unit (micro controller unit, MCU), a programmable logic device (programmable logic device, PLD), or another integrated chip.

In an implementation process, the steps in the foregoing methods may be completed by using an integrated logic circuit of hardware in the processor or instructions in a form of software. The steps in the methods disclosed with reference to embodiments of this application may be directly performed and completed by a hardware processor, or may be performed and completed by using a combination of hardware in the processor and a software module. The software module may be located in a mature storage medium in the art, for example, a random access memory, a flash memory, a read-only memory, a programmable read-only memory or an electrically erasable programmable memory, a register, or the like. The storage medium is located in the memory. The processor reads information in the memory and completes the steps in the foregoing methods in combination with hardware of the processor. To avoid repetition, details are not described herein again.

It should be noted that the processor in this embodiment of this application may be an integrated circuit chip and has a signal processing capability. In an implementation process, the steps in the foregoing method embodiments may be completed by using an integrated logic circuit of hardware in the processor or instructions in a form of software. The processor may be a general purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in embodiments of this application. The general purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory or an electrically erasable programmable memory, a register, or the like. The storage medium is located in the memory. The processor reads information in the memory and completes the steps in the foregoing methods in combination with hardware of the processor.

According to the methods provided in embodiments of this application, this application further provides a computer program product. The computer program product includes a computer program. When the computer program is run on a computer, the computer is enabled to perform the method in any one of embodiments shown in FIG. 5 and FIG. 6.

According to the methods provided in embodiments of this application, this application further provides a computer-readable medium. The computer-readable medium stores a computer program. When the computer program is run on a computer, the computer is enabled to perform the method in any one of embodiments shown in FIG. 5 and FIG. 6.

According to the methods provided in embodiments of this application, this application further provides a system. The system includes the foregoing one or more terminal devices and one or more network devices.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer instructions are loaded and executed on a computer, all or some of processes or functions according to embodiments of this application are generated. The computer may be a general purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state disc (solid state disc, SSD)), or the like.

The network device or the terminal device in the foregoing apparatus embodiments corresponds to the network device or the terminal device in the method embodiments. A corresponding module or unit performs a corresponding step. For example, a receiving module or a sending module (a transceiver) performs a receiving step or a sending step in the method embodiments, and a step other than the sending step and the receiving step may be performed by a processing module (a processor). For a function of a specific module, refer to a corresponding method embodiment. There may be one or more processors.

A person of ordinary skill in the art may be aware that, illustrative logical blocks (illustrative logical block) and steps (step) described with reference to embodiments disclosed in this specification may be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it shall not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, the division of units is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented by using some interfaces. Indirect couplings or communication connections between apparatuses or units may be implemented in electrical, mechanical, or other forms.

The units described as separate components may or may not be physically separate, and components displayed as units may or may not be physical units, may be located in one position, or may be distributed on a plurality of network units. Some or all of the units may be selected according to an actual requirement to achieve the objectives of the solutions of embodiments.

In addition, functional modules in embodiments of this application may be integrated into one processing module, or each of the modules may exist alone physically, or two or more modules may be integrated into one module.

When the functions are implemented in a form of a software functional unit and sold or used as an independent product, the functions may be stored in a computer-readable storage medium. Based on such an understanding, the technical solutions of this application essentially or parts contributing to the prior art or some of the technical solutions may be embodied in a form of a software product. The computer software product is stored in a storage medium, and includes several instructions for instructing a computer device (which may be a personal computer, a server, a network device, or the like) to perform all or some of the steps in the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, an optical disc, or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for determining a modulation and coding scheme MCS table, comprising:
when a discrete fourier transform spread orthogonal frequency division multiplexing DFT-s-OFDM waveform is used for transmission of a physical uplink shared channel PUSCH, receiving, by a terminal device, first information from a network device, wherein the first information indicates a quantity of transmission layers of the PUSCH; and
determining, by the terminal device based on the first information, an MCS table used for transmission of the PUSCH.

2. The method according to claim 1, wherein the method further comprises:
receiving, by the terminal device, second information from the network device, wherein the second information indicates an MCS table; and
determining, by the terminal device based on the first information and the second information, the MCS table used for transmission of the PUSCH.

3. The method according to claim 2, wherein the determining, by the terminal device based on the first information and the second information, the MCS table used for transmission of the PUSCH comprises:
when the MCS table indicated by the second information is a first MCS table, and the quantity of transmission layers of the PUSCH indicated by the first information is greater than 1, determining, by the terminal device, that a second MCS table is used for transmission of the PUSCH, wherein
the second MCS table is as follows:
| MCS index | Modulation order | Target code rate R x 1024 | Spectral efficiency |
|---|---|---|---|
| 0 | q | 240/q | 0.2344 |
| 1 | q | 314/q | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 466 | 2.7305 |
| 18 | 6 | 517 | 3.0293 |
| 19 | 6 | 567 | 3.3223 |
| 20 | 6 | 616 | 3.6094 |
| 21 | 6 | 666 | 3.9023 |
| 22 | 6 | 719 | 4.2129 |
| 23 | 6 | 772 | 4.5234 |
| 24 | 6 | 822 | 4.8164 |
| 25 | 6 | 873 | 5.1152 |
| 26 | 6 | 910 | 5.3320 |
| 27 | 6 | 948 | 5.5547 |
| 28 | q | Reserved | |
| 29 | 2 | Reserved | |
| 30 | 4 | Reserved | |
| 31 | 6 | Reserved | |
wherein q is equal to 1 or 2.

4. The method according to claim 2, wherein the determining, by the terminal device based on the first information and the second information, the MCS table used for transmission of the PUSCH comprises:
when the MCS table indicated by the second information is a first MCS table, and the quantity of transmission layers of the PUSCH indicated by the first information is greater than 1, determining, by the terminal device, that a third MCS table is used for transmission of the PUSCH, wherein
the third MCS table is as follows:
| MCS index | Modulation order | Target code rate R x 1024 | Spectral efficiency |
|---|---|---|---|
| 0 | 2 | 30 | 0.0586 |
| 1 | 2 | 40 | 0.0781 |
| 2 | 2 | 50 | 0.0977 |
| 3 | 2 | 64 | 0.1250 |
| 4 | 2 | 78 | 0.1523 |
| 5 | 2 | 99 | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 4 | 340 | 1.3281 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 6 | 438 | 2.5664 |
| 22 | 6 | 466 | 2.7305 |
| 23 | 6 | 517 | 3.0293 |
| 24 | 6 | 567 | 3.3223 |
| 25 | 6 | 616 | 3.6094 |
| 26 | 6 | 666 | 3.9023 |
| 27 | 6 | 719 | 4.2129 |
| 28 | 6 | 772 | 4.5234 |
| 29 | 2 | Reserved | |
| 30 | 4 | Reserved | |
| 31 | 6 | Reserved | |

5. The method according to claim 2, wherein the method further comprises:
when the MCS table indicated by the second information is a first MCS table, and the quantity of transmission layers of the PUSCH indicated by the first information is greater than 1, determining, by the terminal device, that the first MCS table is used for transmission of the PUSCH;
receiving, by the terminal device, third information and fourth information from the network device, wherein the third information indicates an MCS index, the fourth information indicates an offset value M, and M is an integer greater than or equal to 0; and
determining, by the terminal device based on the MCS index and the offset value M, an MCS in the first MCS table used for transmission of the PUSCH.

6. The method according to claim 2, wherein the determining, by the terminal device based on the first information and the second information, the MCS table used for transmission of the PUSCH comprises:
when the MCS table indicated by the second information is a first MCS table, and the quantity of transmission layers of the PUSCH indicated by the first information is greater than 1, selecting, by the terminal device, at least one MCS from at least one MCS table to generate a fourth MCS table as the MCS table used for transmission of the PUSCH, wherein the at least one MCS table comprises at least one of the first MCS table, a second MCS table, and a third MCS table, wherein
the second MCS table is as follows:
| MCS index | Modulation order | Target code rate R x 1024 | Spectral efficiency |
|---|---|---|---|
| 0 | q | 240/q | 0.2344 |
| 1 | q | 314/q | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 466 | 2.7305 |
| 18 | 6 | 517 | 3.0293 |
| 19 | 6 | 567 | 3.3223 |
| 20 | 6 | 616 | 3.6094 |
| 21 | 6 | 666 | 3.9023 |
| 22 | 6 | 719 | 4.2129 |
| 23 | 6 | 772 | 4.5234 |
| 24 | 6 | 822 | 4.8164 |
| 25 | 6 | 873 | 5.1152 |
| 26 | 6 | 910 | 5.3320 |
| 27 | 6 | 948 | 5.5547 |
| 28 | q | Reserved | |
| 29 | 2 | Reserved | |
| 30 | 4 | Reserved | |
| 31 | 6 | Reserved | |
wherein q is equal to 1 or 2; and
the third MCS table is as follows:
| MCS index | Modulation order | Target code rate R x 1024 | Spectral efficiency |
|---|---|---|---|
| 0 | 2 | 30 | 0.0586 |
| 1 | 2 | 40 | 0.0781 |
| 2 | 2 | 50 | 0.0977 |
| 3 | 2 | 64 | 0.1250 |
| 4 | 2 | 78 | 0.1523 |
| 5 | 2 | 99 | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 4 | 340 | 1.3281 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 6 | 438 | 2.5664 |
| 22 | 6 | 466 | 2.7305 |
| 23 | 6 | 517 | 3.0293 |
| 24 | 6 | 567 | 3.3223 |
| 25 | 6 | 616 | 3.6094 |
| 26 | 6 | 666 | 3.9023 |
| 27 | 6 | 719 | 4.2129 |
| 28 | 6 | 772 | 4.5234 |
| 29 | 2 | Reserved | |
| 30 | 4 | Reserved | |
| 31 | 6 | Reserved | |

7. The method according to claim 6, wherein the fourth MCS table comprises at least one of the following (modulation order, coding rate) combinations: (6, 438/1024), (6, 466/1024), or (6, 517/1024).

8. The method according to any one of claims 3 to 7, wherein the first MCS table is as follows:
| MCS index | Modulation order | Target code rate R x 1024 | Spectral efficiency |
|---|---|---|---|
| 0 | q | 60/q | 0.0586 |
| 1 | q | 80/q | 0.0781 |
| 2 | q | 100/q | 0.0977 |
| 3 | q | 128/q | 0.1250 |
| 4 | q | 156/q | 0.1523 |
| 5 | q | 198/q | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 2 | 679 | 1.3262 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 4 | 658 | 2.5703 |
| 22 | 4 | 699 | 2.7305 |
| 23 | 4 | 772 | 3.0156 |
| 24 | 6 | 567 | 3.3223 |
| 25 | 6 | 616 | 3.6094 |
| 26 | 6 | 666 | 3.9023 |
| 27 | 6 | 772 | 4.5234 |
| 28 | q | Reserved | |
| 29 | 2 | Reserved | |
| 30 | 4 | Reserved | |
| 31 | 6 | Reserved | |
wherein q is equal to 1 or 2.

9. The method according to any one of claims 1 to 8, wherein the method further comprises:
receiving, by the terminal device, fifth information from the network device, wherein the fifth information indicates that the DFT-s-OFDM waveform is used for transmission of the PUSCH, and the fifth information is downlink control information DCI or a media access control control element MAC-CE.

10. A method for determining a modulation and coding scheme MCS table, comprising:
determining, by a network device, that a terminal device uses a discrete fourier transform spread orthogonal frequency division multiplexing DFT-s-OFDM waveform for transmission of a physical uplink shared channel PUSCH; and
sending, by the network device, first information to the terminal device, wherein the first information indicates a quantity of transmission layers of the PUSCH, and the quantity of transmission layers of the PUSCH is used to determine an MCS table used for transmission of the PUSCH.

11. The method according to claim 10, wherein the method further comprises:
sending, by the network device, second information to the terminal device, wherein the second information indicates an MCS table, and the first information and the second information are used to determine the MCS table used for transmission of the PUSCH.

12. The method according to claim 11, wherein when the MCS table indicated by the second information is a first MCS table, and the quantity of transmission layers of the PUSCH indicated by the first information is greater than 1, a second MCS table is used for transmission of the PUSCH, wherein
the second MCS table is as follows:
| MCS index | Modulation order | Target code rate R x 1024 | Spectral efficiency |
|---|---|---|---|
| 0 | q | 240/q | 0.2344 |
| 1 | q | 314/q | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 466 | 2.7305 |
| 18 | 6 | 517 | 3.0293 |
| 19 | 6 | 567 | 3.3223 |
| 20 | 6 | 616 | 3.6094 |
| 21 | 6 | 666 | 3.9023 |
| 22 | 6 | 719 | 4.2129 |
| 23 | 6 | 772 | 4.5234 |
| 24 | 6 | 822 | 4.8164 |
| 25 | 6 | 873 | 5.1152 |
| 26 | 6 | 910 | 5.3320 |
| 27 | 6 | 948 | 5.5547 |
| 28 | q | Reserved | |
| 29 | 2 | Reserved | |
| 30 | 4 | Reserved | |
| 31 | 6 | Reserved | |
wherein q is equal to 1 or 2.

13. The method according to claim 11, wherein when the MCS table indicated by the second information is a first MCS table, and the quantity of transmission layers of the PUSCH indicated by the first information is greater than 1, a third MCS table is used for transmission of the PUSCH, wherein
the third MCS table is as follows:
| MCS index | Modulation order | Target code rate R x 1024 | Spectral efficiency |
|---|---|---|---|
| 0 | 2 | 30 | 0.0586 |
| 1 | 2 | 40 | 0.0781 |
| 2 | 2 | 50 | 0.0977 |
| 3 | 2 | 64 | 0.1250 |
| 4 | 2 | 78 | 0.1523 |
| 5 | 2 | 99 | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 4 | 340 | 1.3281 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 6 | 438 | 2.5664 |
| 22 | 6 | 466 | 2.7305 |
| 23 | 6 | 517 | 3.0293 |
| 24 | 6 | 567 | 3.3223 |
| 25 | 6 | 616 | 3.6094 |
| 26 | 6 | 666 | 3.9023 |
| 27 | 6 | 719 | 4.2129 |
| 28 | 6 | 772 | 4.5234 |
| 29 | 2 | Reserved | |
| 30 | 4 | Reserved | |
| 31 | 6 | Reserved | |

14. The method according to claim 11, wherein when the MCS table indicated by the second information is a first MCS table, and the quantity of transmission layers of the PUSCH indicated by the first information is greater than 1, the first MCS table is used for transmission of the PUSCH; and
the method further comprises:
sending, by the network device, third information and fourth information to the terminal device, wherein the third information indicates an MCS index, the fourth information indicates an offset value M, the MCS index and the offset value M are used to determine an MCS in the first MCS table used for transmission of the PUSCH, and M is an integer greater than or equal to 0.

15. The method according to claim 11, wherein when the MCS table indicated by the second information is a first MCS table, and the quantity of transmission layers of the PUSCH indicated by the first information is greater than 1, the MCS table used for transmission of the PUSCH is a fourth MCS table generated by selecting at least one MCS from at least one MCS table, and the at least one MCS table comprises at least one of the first MCS table, a second MCS table, and a third MCS table, wherein
the second MCS table is as follows:
| MCS index | Modulation order | Target code rate R x 1024 | Spectral efficiency |
|---|---|---|---|
| 0 | q | 240/q | 0.2344 |
| 1 | q | 314/q | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 466 | 2.7305 |
| 18 | 6 | 517 | 3.0293 |
| 19 | 6 | 567 | 3.3223 |
| 20 | 6 | 616 | 3.6094 |
| 21 | 6 | 666 | 3.9023 |
| 22 | 6 | 719 | 4.2129 |
| 23 | 6 | 772 | 4.5234 |
| 24 | 6 | 822 | 4.8164 |
| 25 | 6 | 873 | 5.1152 |
| 26 | 6 | 910 | 5.3320 |
| 27 | 6 | 948 | 5.5547 |
| 28 | q | Reserved | |
| 29 | 2 | Reserved | |
| 30 | 4 | Reserved | |
| 31 | 6 | Reserved | |
wherein q is equal to 1 or 2; and
the third MCS table is as follows:
| MCS index | Modulation order | Target code rate R x 1024 | Spectral efficiency |
|---|---|---|---|
| 0 | 2 | 30 | 0.0586 |
| 1 | 2 | 40 | 0.0781 |
| 2 | 2 | 50 | 0.0977 |
| 3 | 2 | 64 | 0.1250 |
| 4 | 2 | 78 | 0.1523 |
| 5 | 2 | 99 | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 4 | 340 | 1.3281 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 6 | 438 | 2.5664 |
| 22 | 6 | 466 | 2.7305 |
| 23 | 6 | 517 | 3.0293 |
| 24 | 6 | 567 | 3.3223 |
| 25 | 6 | 616 | 3.6094 |
| 26 | 6 | 666 | 3.9023 |
| 27 | 6 | 719 | 4.2129 |
| 28 | 6 | 772 | 4.5234 |
| 29 | 2 | Reserved | |
| 30 | 4 | Reserved | |
| 31 | 6 | Reserved | |

16. The method according to claim 15, wherein the fourth MCS table comprises at least one of the following (modulation order, coding rate) combinations: (6, 438/1024), (6, 466/1024), and (6, 517/1024).

17. The method according to any one of claims 12 to 16, wherein the first MCS table is as follows:
| MCS index | Modulation order | Target code rate R x 1024 | Spectral efficiency |
|---|---|---|---|
| 0 | q | 60/q | 0.0586 |
| 1 | q | 80/q | 0.0781 |
| 2 | q | 100/q | 0.0977 |
| 3 | q | 128/q | 0.1250 |
| 4 | q | 156/q | 0.1523 |
| 5 | q | 198/q | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 2 | 679 | 1.3262 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 4 | 658 | 2.5703 |
| 22 | 4 | 699 | 2.7305 |
| 23 | 4 | 772 | 3.0156 |
| 24 | 6 | 567 | 3.3223 |
| 25 | 6 | 616 | 3.6094 |
| 26 | 6 | 666 | 3.9023 |
| 27 | 6 | 772 | 4.5234 |
| 28 | q | Reserved | |
| 29 | 2 | Reserved | |
| 30 | 4 | Reserved | |
| 31 | 6 | Reserved | |
wherein q is equal to 1 or 2.

18. The method according to any one of claims 10 to 17, wherein the method further comprises:
sending, by the network device, fifth information to the terminal device, wherein the fifth information indicates that the DFT-s-OFDM waveform is used for transmission of the PUSCH, and the fifth information is downlink control information DCI or a media access control control element MAC-CE.

19. An apparatus for determining a modulation and coding scheme MCS table, comprising:
a receiving module, configured to: when a discrete fourier transform spread orthogonal frequency division multiplexing DFT-s-OFDM waveform is used for transmission of a physical uplink shared channel PUSCH, receive first information from a network device, wherein the first information indicates a quantity of transmission layers of the PUSCH; and
a processing module, configured to determine, based on the first information, an MCS table used for transmission of the PUSCH.

20. The apparatus according to claim 19, wherein
the receiving module is further configured to receive second information from the network device, wherein the second information indicates an MCS table; and
the processing module is further configured to determine, based on the first information and the second information, the MCS table used for transmission of the PUSCH.

21. The apparatus according to claim 20, wherein
the processing module is further configured to: when the MCS table indicated by the second information is a first MCS table, and the quantity of transmission layers of the PUSCH indicated by the first information is greater than 1, determine that a second MCS table is used for transmission of the PUSCH, wherein
the second MCS table is as follows:
| MCS index | Modulation order | Target code rate R x 1024 | Spectral efficiency |
|---|---|---|---|
| 0 | q | 240/q | 0.2344 |
| 1 | q | 314/q | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 466 | 2.7305 |
| 18 | 6 | 517 | 3.0293 |
| 19 | 6 | 567 | 3.3223 |
| 20 | 6 | 616 | 3.6094 |
| 21 | 6 | 666 | 3.9023 |
| 22 | 6 | 719 | 4.2129 |
| 23 | 6 | 772 | 4.5234 |
| 24 | 6 | 822 | 4.8164 |
| 25 | 6 | 873 | 5.1152 |
| 26 | 6 | 910 | 5.3320 |
| 27 | 6 | 948 | 5.5547 |
| 28 | q | Reserved | |
| 29 | 2 | Reserved | |
| 30 | 4 | Reserved | |
| 31 | 6 | Reserved | |
wherein q is equal to 1 or 2.

22. The apparatus according to claim 20, wherein
the processing module is further configured to: when the MCS table indicated by the second information is a first MCS table, and the quantity of transmission layers of the PUSCH indicated by the first information is greater than 1, determine that a third MCS table is used for transmission of the PUSCH, wherein
the third MCS table is as follows:
| MCS index | Modulation order | Target code rate R x 1024 | Spectral efficiency |
|---|---|---|---|
| 0 | 2 | 30 | 0.0586 |
| 1 | 2 | 40 | 0.0781 |
| 2 | 2 | 50 | 0.0977 |
| 3 | 2 | 64 | 0.1250 |
| 4 | 2 | 78 | 0.1523 |
| 5 | 2 | 99 | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 4 | 340 | 1.3281 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 6 | 438 | 2.5664 |
| 22 | 6 | 466 | 2.7305 |
| 23 | 6 | 517 | 3.0293 |
| 24 | 6 | 567 | 3.3223 |
| 25 | 6 | 616 | 3.6094 |
| 26 | 6 | 666 | 3.9023 |
| 27 | 6 | 719 | 4.2129 |
| 28 | 6 | 772 | 4.5234 |
| 29 | 2 | Reserved | |
| 30 | 4 | Reserved | |
| 31 | 6 | Reserved | |

23. The apparatus according to claim 20, wherein
the processing module is further configured to: when the MCS table indicated by the second information is a first MCS table, and the quantity of transmission layers of the PUSCH indicated by the first information is greater than 1, determine that the first MCS table is used for transmission of the PUSCH;
the receiving module is further configured to receive third information and fourth information from the network device, wherein the third information indicates an MCS index, the fourth information indicates an offset value M, and M is an integer greater than or equal to 0; and
the processing module is further configured to determine, based on the MCS index and the offset value M, an MCS in the first MCS table used for transmission of the PUSCH.

24. The apparatus according to claim 20, wherein
the processing module is further configured to: when the MCS table indicated by the second information is a first MCS table, and the quantity of transmission layers of the PUSCH indicated by the first information is greater than 1, select at least one MCS from at least one MCS table to generate a fourth MCS table as the MCS table used for transmission of the PUSCH, wherein the at least one MCS table comprises at least one of the first MCS table, a second MCS table, and a third MCS table, wherein
the second MCS table is as follows:
| MCS index | Modulation order | Target code rate R x 1024 | Spectral efficiency |
|---|---|---|---|
| 0 | q | 240/q | 0.2344 |
| 1 | q | 314/q | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 466 | 2.7305 |
| 18 | 6 | 517 | 3.0293 |
| 19 | 6 | 567 | 3.3223 |
| 20 | 6 | 616 | 3.6094 |
| 21 | 6 | 666 | 3.9023 |
| 22 | 6 | 719 | 4.2129 |
| 23 | 6 | 772 | 4.5234 |
| 24 | 6 | 822 | 4.8164 |
| 25 | 6 | 873 | 5.1152 |
| 26 | 6 | 910 | 5.3320 |
| 27 | 6 | 948 | 5.5547 |
| 28 | q | Reserved | |
| 29 | 2 | Reserved | |
| 30 | 4 | Reserved | |
| 31 | 6 | Reserved | |
wherein q is equal to 1 or 2; and
the third MCS table is as follows:
| MCS index | Modulation order | Target code rate R x 1024 | Spectral efficiency |
|---|---|---|---|
| 0 | 2 | 30 | 0.0586 |
| 1 | 2 | 40 | 0.0781 |
| 2 | 2 | 50 | 0.0977 |
| 3 | 2 | 64 | 0.1250 |
| 4 | 2 | 78 | 0.1523 |
| 5 | 2 | 99 | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 4 | 340 | 1.3281 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 6 | 438 | 2.5664 |
| 22 | 6 | 466 | 2.7305 |
| 23 | 6 | 517 | 3.0293 |
| 24 | 6 | 567 | 3.3223 |
| 25 | 6 | 616 | 3.6094 |
| 26 | 6 | 666 | 3.9023 |
| 27 | 6 | 719 | 4.2129 |
| 28 | 6 | 772 | 4.5234 |
| 29 | 2 | Reserved | |
| 30 | 4 | Reserved | |
| 31 | 6 | Reserved | |

25. An apparatus for determining a modulation and coding scheme MCS table, comprising:
a processing module, configured to determine that a terminal device uses a discrete fourier transform spread orthogonal frequency division multiplexing DFT-s-OFDM waveform for transmission of a physical uplink shared channel PUSCH; and
a sending module, configured to send first information to the terminal device, wherein the first information indicates a quantity of transmission layers of the PUSCH, and the quantity of transmission layers of the PUSCH is used to determine an MCS table used for transmission of the PUSCH.

26. The apparatus according to claim 25, wherein
the sending module is further configured to send second information to the terminal device, wherein the second information indicates an MCS table, and the first information and the second information are used to determine the MCS table used for transmission of the PUSCH.

27. The apparatus according to claim 26, wherein when the MCS table indicated by the second information is a first MCS table, and the quantity of transmission layers of the PUSCH indicated by the first information is greater than 1, a second MCS table is used for transmission of the PUSCH, wherein
the second MCS table is as follows:
| MCS index | Modulation order | Target code rate R x 1024 | Spectral efficiency |
|---|---|---|---|
| 0 | q | 240/q | 0.2344 |
| 1 | q | 314/q | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 466 | 2.7305 |
| 18 | 6 | 517 | 3.0293 |
| 19 | 6 | 567 | 3.3223 |
| 20 | 6 | 616 | 3.6094 |
| 21 | 6 | 666 | 3.9023 |
| 22 | 6 | 719 | 4.2129 |
| 23 | 6 | 772 | 4.5234 |
| 24 | 6 | 822 | 4.8164 |
| 25 | 6 | 873 | 5.1152 |
| 26 | 6 | 910 | 5.3320 |
| 27 | 6 | 948 | 5.5547 |
| 28 | q | Reserved | |
| 29 | 2 | Reserved | |
| 30 | 4 | Reserved | |
| 31 | 6 | Reserved | |
wherein q is equal to 1 or 2.

28. The apparatus according to claim 26, wherein when the MCS table indicated by the second information is a first MCS table, and the quantity of transmission layers of the PUSCH indicated by the first information is greater than 1, a third MCS table is used for transmission of the PUSCH, wherein
the third MCS table is as follows:
| MCS index | Modulation order | Target code rate R x 1024 | Spectral efficiency |
|---|---|---|---|
| 0 | 2 | 30 | 0.0586 |
| 1 | 2 | 40 | 0.0781 |
| 2 | 2 | 50 | 0.0977 |
| 3 | 2 | 64 | 0.1250 |
| 4 | 2 | 78 | 0.1523 |
| 5 | 2 | 99 | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 4 | 340 | 1.3281 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 6 | 438 | 2.5664 |
| 22 | 6 | 466 | 2.7305 |
| 23 | 6 | 517 | 3.0293 |
| 24 | 6 | 567 | 3.3223 |
| 25 | 6 | 616 | 3.6094 |
| 26 | 6 | 666 | 3.9023 |
| 27 | 6 | 719 | 4.2129 |
| 28 | 6 | 772 | 4.5234 |
| 29 | 2 | Reserved | |
| 30 | 4 | Reserved | |
| 31 | 6 | Reserved | |

29. The apparatus according to claim 26, wherein when the MCS table indicated by the second information is a first MCS table, and the quantity of transmission layers of the PUSCH indicated by the first information is greater than 1, the first MCS table is used for transmission of the PUSCH; and
the sending module is further configured to send third information and fourth information to the terminal device, wherein the third information indicates an MCS index, the fourth information indicates an offset value M, the MCS index and the offset value M are used to determine an MCS in the first MCS table used for transmission of the PUSCH, and M is an integer greater than or equal to 0.

30. The apparatus according to claim 26, wherein when the MCS table indicated by the second information is a first MCS table, and the quantity of transmission layers of the PUSCH indicated by the first information is greater than 1, the MCS table used for transmission of the PUSCH is a fourth MCS table generated by selecting at least one MCS from at least one MCS table, and the at least one MCS table comprises at least one of the first MCS table, a second MCS table, and a third MCS table, wherein
the second MCS table is as follows:
| MCS index | Modulation order | Target code rate R x 1024 | Spectral efficiency |
|---|---|---|---|
| 0 | q | 240/q | 0.2344 |
| 1 | q | 314/q | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 466 | 2.7305 |
| 18 | 6 | 517 | 3.0293 |
| 19 | 6 | 567 | 3.3223 |
| 20 | 6 | 616 | 3.6094 |
| 21 | 6 | 666 | 3.9023 |
| 22 | 6 | 719 | 4.2129 |
| 23 | 6 | 772 | 4.5234 |
| 24 | 6 | 822 | 4.8164 |
| 25 | 6 | 873 | 5.1152 |
| 26 | 6 | 910 | 5.3320 |
| 27 | 6 | 948 | 5.5547 |
| 28 | q | Reserved | |
| 29 | 2 | Reserved | |
| 30 | 4 | Reserved | |
| 31 | 6 | Reserved | |
wherein q is equal to 1 or 2; and
the third MCS table is as follows:
| MCS index | Modulation order | Target code rate R x 1024 | Spectral efficiency |
|---|---|---|---|
| 0 | 2 | 30 | 0.0586 |
| 1 | 2 | 40 | 0.0781 |
| 2 | 2 | 50 | 0.0977 |
| 3 | 2 | 64 | 0.1250 |
| 4 | 2 | 78 | 0.1523 |
| 5 | 2 | 99 | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 4 | 340 | 1.3281 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 6 | 438 | 2.5664 |
| 22 | 6 | 466 | 2.7305 |
| 23 | 6 | 517 | 3.0293 |
| 24 | 6 | 567 | 3.3223 |
| 25 | 6 | 616 | 3.6094 |
| 26 | 6 | 666 | 3.9023 |
| 27 | 6 | 719 | 4.2129 |
| 28 | 6 | 772 | 4.5234 |
| 29 | 2 | Reserved | |
| 30 | 4 | Reserved | |
| 31 | 6 | Reserved | |

31. A communication apparatus, comprising a memory and a processor, wherein
the memory is configured to store a computer program; and
the processor is configured to execute the computer program stored in the memory, to enable the communication apparatus to perform the method according to any one of claims 1 to 9, or perform the method according to any one of claims 10 to 18.

32. A computer-readable storage medium, wherein the computer-readable storage medium comprises a computer program, and when the computer program is read and executed by one or more processors, the method according to any one of claims 1 to 9 or claims 10 to 18 is implemented.

33. A chip, wherein the chip is coupled to a memory, and is configured to read and execute a computer program stored in the memory, to implement the method according to any one of claims 1 to 9 or claims 10 to 18.

34. A computer program product, comprising a computer program or instructions, wherein when the computer program or the instructions are executed, the method according to any one of claims 1 to 9 or claims 10 to 18 is implemented.
